(19) **Europäisches Patentamt / European Patent Office / Office européen des brevets**

(11) **EP 2 861 959 B1**

(12) # FASCICULE DE BREVET EUROPEEN

(45) Date de publication et mention de la délivrance du brevet:
**28.11.2018 Bulletin 2018/48**

(21) Numéro de dépôt: **13729337.9**

(22) Date de dépôt: **17.06.2013**

(51) Int Cl.:
**G01N 17/04** *(2006.01)*

(86) Numéro de dépôt international:
**PCT/EP2013/062489**

(87) Numéro de publication internationale:
**WO 2013/189877 (27.12.2013 Gazette 2013/52)**

(54) **DISPOSITIF DE MESURE DE LA CORROSION DANS UNE STRUCTURE METALLIQUE OU COMPRENANT AU MOINS UNE ARMATURE METALLIQUE, UTILISATIONS ET PROCEDE ASSOCIES**

VORRICHTUNG ZUR MESSUNG DER KORROSION IN EINER METALLSTRUKTUR ODER EINER STRUKTUR MIT EINER METALLBEWEHRUNG, ENTSPRECHENDE VERWENDUNGEN UND VERFAHREN

DEVICE FOR MEASURING THE CORROSION IN A METALLIC STRUCTURE OR A STRUCTURE COMPRISING METAL REINFORCEMENT, ASSOCIATED USES AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2012 FR 1255692**

(43) Date de publication de la demande:
**22.04.2015 Bulletin 2015/17**

(73) Titulaire: **Commissariat à l'Énergie Atomique et aux Énergies Alternatives
75015 Paris (FR)**

(72) Inventeurs:
- **MAGNE, Sylvain**
  **F-92320 Chatillon (FR)**
- **ALI ALVAREZ, Shamir**
  **F-75014 Paris (FR)**
- **FERDINAND, Pierre**
  **F-78800 Houilles (FR)**
- **ROUGEAULT, Stéphane**
  **F-92330 Sceaux (FR)**

(74) Mandataire: **Brevalex
95, rue d'Amsterdam
75378 Paris Cedex 8 (FR)**

(56) Documents cités:

- **JUNG-RYUL LEE ET AL: "TECHNICAL DESIGN NOTE; A structural corrosion-monitoring sensor based on a pair of prestrained fiber Bragg gratings", MEASUREMENT SCIENCE AND TECHNOLOGY, IOP, BRISTOL, GB, vol. 21, no. 1, 16 janvier 2009 (2009-01-16), page 17002, XP020168517, ISSN: 0957-0233 cité dans la demande**
- **MAJUMDER M ET AL: "Fibre Bragg gratings in structural health monitoring-Present status and applications", SENSORS AND ACTUATORS A, ELSEVIER SEQUOIA S.A., LAUSANNE, CH, vol. 147, no. 1, 22 avril 2008 (2008-04-22), pages 150-164, XP023182808, ISSN: 0924-4247, DOI: 10.1016/J.SNA.2008.04.008 [extrait le 2008-04-22]**
- **MOYO P ET AL: "Development of fiber Bragg grating sensors for monitoring civil infrastructure", ENGINEERING STRUCTURES, BUTTERWORTH, GB, vol. 27, no. 12, 11 juillet 2005 (2005-07-11), pages 1828-1834, XP027766144, ISSN: 0141-0296 [extrait le 2005-10-01]**
- **YUNG BIN LIN ET AL: "The health monitoring of a prestressed concrete beam by using fiber Bragg grating sensors; The health monitoring of a prestressed concrete beam by using fiber Bragg grating sensors", SMART MATERIALS AND STRUCTURES, IOP PUBLISHING LTD., BRISTOL, GB, vol. 13, no. 4, 18 mai 2004 (2004-05-18), pages 712-718, XP020072476, ISSN: 0964-1726, DOI: 10.1088/0964-1726/13/4/008**

EP 2 861 959 B1

## Description

### DOMAINE TECHNIQUE

La présente invention se rapporte au domaine de la détection, de la mesure et du contrôle de la corrosion dans des structures métalliques ou des structures comprenant au moins une armature métallique (en particulier dans les structures en béton armé).

Elle se rapporte plus particulièrement à un dispositif de mesure de la corrosion dans une structure métallique ou comprenant au moins une armature métallique, aux utilisations de ce dispositif et à un procédé associé à un tel dispositif.

De manière générale, la présente invention peut être utilisée pour détecter la corrosion dans tous types de structures susceptibles de subir de la corrosion, c'est-à-dire dans les structures métalliques ou les structures comprenant au moins une armature métallique (en particulier les structures en béton armé).

L'invention est donc susceptible d'être utilisée plus particulièrement pour la détection de la corrosion dans les ouvrages du Génie civil (bâtiments, barrages, ponts, tunnels, etc.), ou bien encore dans les transports maritimes (bateaux, etc.), les structures maritimes et les fondations d'ouvrages côtiers ou en mer (digues, jetées, éoliennes et plates-formes offshores, usines marémotrices, hydroliennes, etc.).

### ÉTAT DE LA TECHNIQUE ANTÉRIEURE

La détection de la corrosion au sein des structures métalliques ou des structures comprenant au moins une armature métallique, et en particulier les structures en béton armé, est primordiale.

En effet, lorsqu'elles sont attaquées par la corrosion, ces structures sont fragilisées, ce qui peut mettre en péril la sécurité des biens et des personnes et avoir des conséquences socio-économiques considérables.

Etant donné qu'une déconstruction massive suivie d'une reconstruction des structures corrodées engendrerait des coûts trop importants, il est nécessaire de procéder à une maintenance de ces structures afin d'identifier les structures corrodées et ainsi pouvoir les réparer à temps.

Actuellement, cette maintenance est programmée de manière périodique et systématique. Or, l'inconvénient de la maintenance programmée (*« scheduled-driven maintenance»* en anglais) est qu'elle nécessite d'inspecter périodiquement des surfaces de structures très importantes, pouvant atteindre plusieurs dizaines de milliers de $m^2$, ce qui représente un travail considérable.

En outre, dans le cas particulier d'une structure en béton armé, il est rarement possible d'anticiper l'état réel de la structure uniquement à partir d'une analyse visuelle de sa surface extérieure. Il s'avère donc nécessaire de recourir à des moyens d'inspection en profondeur dans la structure, ou dans ses fondations enterrées, ce qui complexifie encore son inspection et la durée nécessaire à son inspection.

La localisation de la corrosion et l'estimation de son degré d'évolution sont donc rendues délicates et présentent souvent une grande incertitude.

Compte tenu de la constante augmentation des coûts afférents à l'entretien et à la restauration des structures endommagées par la corrosion, on cherche donc de plus en plus à privilégier une stratégie de réparation conditionnelle (« *condition-based maintenance »,* ou CBM, en anglais), plutôt que périodique.

Le principe d'une maintenance conditionnelle (CBM) est d'optimiser les interventions là où elles sont réellement nécessaires et ainsi éviter une analyse systématique, longue et coûteuse, des structures et infrastructures.

Cependant, l'efficacité de cette stratégie de maintenance évoluée est tributaire de l'obtention d'une cartographie précise et fiable de l'état de corrosion global d'une structure, afin d'intervenir sélectivement sur des zones identifiées comme « à risque ». Pour cela, il est nécessaire de réaliser des mesures fiables sur le plan métrologique (et non plus seulement d'inspiration probabiliste), réparties (et non plus ponctuelles), *in-situ* (et non plus à partir de la surface, lorsque les parties susceptibles de se corroder sont situées à l'intérieur de la structure), à la demande et/ou sous conditions (et non plus programmées) et, si possible, en minimisant l'impact socio-économique de la maintenance sur l'usage de l'infrastructure et en optimisant le coût de cette maintenance.

Parmi les capteurs qui sont actuellement utilisés pour détecter la corrosion dans le cadre d'une maintenance programmée, rares sont ceux qui seraient susceptibles de convenir pour une mise en oeuvre dans le cadre d'une maintenance conditionnelle, la majorité de ces capteurs fournissant des mesures probabilistes, ponctuelles et/ou obtenues à partir de la surface de la structure.

Parmi les potentiels candidats, les Inventeurs se sont focalisés sur les capteurs qui permettent de réaliser une mesure directe de la corrosion, et en particuliers sur les capteurs à fibre optique (CFO) dont le principe de mesure de la corrosion repose sur une conversion mécano-optique.

C'est le cas, par exemple, du capteur décrit par Grattan et al. dans leur article « Monitoring of corrosion in structural reinforcing bars: performance comparison using in situ fiber-optic and electric wire strain gauge systems », IEEE Sensors Journal 2009, 9(11), 1494-1502 (référence [1]).

Dans cet article, Grattan *et al.* décrivent un procédé de détection des effets mécaniques de la corrosion d'une armature en fer située dans du béton armé, grâce à l'utilisation d'un capteur à réseaux de Bragg sensible aux contraintes induites par l'expansion des produits de corrosion (oxydes de fer). Ce capteur comprend une fibre optique, ainsi que des réseaux de Bragg qui sont photoinscrits dans le coeur de la fibre optique et qui servent de transducteurs (conversion corrosion-déformation). Cette fibre optique ainsi transformée est collée, à l'aide d'une résine époxyde et dans le sens de sa longueur, sur une armature en fer dont on souhaite suivre la corrosion. L'armature équipée de la fibre optique est enfin disposée au sein d'une éprouvette en béton et la structure ainsi obtenue est soumise à une corrosion accélérée.

A l'issue de cette expérience, Grattan *et al.* mettent en évidence un décalage de la longueur d'onde de Bragg, qui est induit par l'expansion des produits de corrosion (compression ou traction).

L'inconvénient de ce capteur est que les mesures qu'il permet d'obtenir englobent à la fois les déformations dues aux effets thermomécaniques globaux appliqués au support (armature) sur lequel il est fixé et celles dues aux effets mécaniques locaux propres à la corrosion. Les mesures obtenues ne sont donc pas suffisamment distinctives et précises.

Un autre exemple de capteur à fibre optique de corrosion est détaillé par les auteurs Lee et al. dans leur article « A structural corrosion-monitoring sensor based on a pair of prestrained fiber Bragg gratings », Measurement Science and Technology 2010, 21(1), 017002.1-017002.7 (référence [2]**).**

Dans cet article, Lee *et al.* décrivent un capteur à fibre optique (CFO) de corrosion basé sur l'usage d'un réseau de Bragg. Ce capteur est composé d'une fibre optique comprenant un réseau de Bragg et d'une plaque de métal sacrificielle destinée à être corrodée. La fibre optique est tout d'abord prétendue à l'aide d'éléments mécaniques de pré-tension, puis est collée sur la plaque de métal sacrificielle à l'aide d'une résine époxy. Après polymérisation de la résine, les éléments mécaniques de pré-tension sont retirés. Il apparait alors un état d'équilibre entre la force exercée par la fibre (prétendue) et celle exercée en réaction par la plaque (mise en compression), qui est fonction des rigidités respectives de la fibre et de la plaque.

Dans un exemple de réalisation décrit par Lee *et al.,* le CFO mesure 34 mm de long. La plaque sacrificielle mesure 34 mm de long, le réseau de Bragg fait 10 mm de long et chaque zone de collage s'étend sur 10 mm. Dans ces zones de collage, la plaque sacrificielle est revêtue d'une couche en acrylique pour la protéger contre la corrosion. Ainsi, seule la partie centrale du CFO (14 mm) est exposée à l'environnement. A l'état d'équilibre, un décalage en longueur de 2 nm est observé dans la réponse spectrale du réseau de Bragg pour ce CFO particulier (déformation équivalente à environ 1670 microdéformations) ; sous l'action de la corrosion, la masse et la section de la plaque sacrificielle se réduisent et la réduction de rigidité consécutive à la corrosion entraine une modification de la valeur du décalage spectral.

Lee *et al.* décrivent en outre un procédé de compensation thermomécanique reposant sur l'utilisation de deux capteurs à fibre optique comprenant chacun un réseau de Bragg, ces deux capteurs étant reliés en série ou en parallèle et placés parallèlement l'un à l'autre, l'un des capteurs étant intégralement protégé de la corrosion par l'application d'un revêtement acrylique sur toute sa surface, tandis que l'autre capteur est exposé à l'environnement. Ainsi, contrairement au CFO décrit dans la référence **[1],** le montage particulier décrit dans la référence **[2]** permet de mettre en oeuvre une compensation thermomécanique.

L'inconvénient de la solution proposée par les auteurs Lee *et al.* pour discriminer les effets thermomécaniques globaux (appliqués au support métallique auquel la fibre optique est fixée (plaque de métal sacrificielle)) des effets mécaniques locaux propres à la corrosion est qu'elle est complexe, car elle nécessite l'utilisation d'un CFO supplémentaire, protégé de la corrosion et placé parallèlement au premier CFO.

Un autre inconvénient du montage particulier proposé dans la référence **[2]** est qu'il ne permet d'obtenir qu'une mesure ponctuelle de la corrosion. Or, pour garantir une surveillance optimale de la progression de la corrosion au sein d'une structure, il faudrait pouvoir disposer d'une multitude de points de mesure, ce qui obligerait à accroître considérablement le nombre de capteurs (sachant qu'il y a deux capteurs par point de mesure). Cela n'est concrètement pas possible car le nombre de points de mesure est limité pour des raisons technico-économiques (coût du capteur, mais surtout de son déploiement au sein de la structure et de la connectique nécessaire). Un tel montage ne conviendrait donc pas pour la mise en oeuvre d'une maintenance conditionnelle (CBM).

Au vu des inconvénients des CFO de corrosion décrits ci-dessus, les Inventeurs se sont fixé comme but de concevoir un dispositif de mesure de la corrosion qui permette à la fois d'obtenir une pluralité de points de mesure de la corrosion, tout en simplifiant la mise en oeuvre d'une compensation thermomécanique, rendant ainsi possible la mise en oeuvre d'un tel dispositif dans le cadre d'une maintenance conditionnelle.

## EXPOSÉ DE L'INVENTION

Ce but et d'autres sont atteints par l'invention qui propose, en premier lieu, un dispositif de mesure de la corrosion dans une structure métallique ou comprenant au moins une armature métallique, ledit dispositif comprenant :

- au moins un ensemble qui comprend :

  • une pièce métallique, destinée à être rendue mécaniquement solidaire de la structure, ladite pièce métallique s'étendant selon une direction longitudinale et étant apte à subir des contraintes sous l'effet de la corrosion et/ou d'une variation thermomécanique ;
  • des moyens de transduction comprenant une fibre optique, la fibre optique étant fixée sur la pièce métallique dans un état précontraint en compression de manière à subir les contraintes subies par la pièce métallique, lesdits moyens de transduction étant aptes à modifier une lumière se propageant dans la fibre optique sous l'effet des contraintes appliquées à la fibre optique ;

- des moyens de mesure et de traitement, pour mesurer et traiter les réponses spectrales fournies par les moyens de transduction dudit au moins un ensemble.

Le dispositif selon l'invention est caractérisé en ce que la pièce métallique dudit au moins un ensemble présente une alternance de premières et secondes portions, agencées selon la direction longitudinale de la pièce métallique, chacune des premières et secondes portions étant associée à au moins un des moyens de transduction et seules les premières portions étant recouvertes d'une couche en un matériau de protection contre la corrosion, de telle sorte que les réponses spectrales fournies par les moyens de transduction associés aux premières portions sont aptes à traduire l'application d'une contrainte thermomécanique aux premières portions, tandis que les réponses spectrales fournies par les moyens de transduction associés aux secondes portions sont aptes à traduire l'application d'une contrainte thermomécanique et/ou d'une corrosion aux secondes portions, ladite couche en un matériau de protection contre la corrosion comportant une rainure dans laquelle est logée la fibre optique.

Le dispositif selon l'invention est également caractérisé en ce que les moyens de mesure et de traitement comprennent en outre des moyens pour comparer les réponses spectrales fournies par les moyens de transduction associés aux premières portions et celles fournies par les moyens de transduction associés aux secondes portions, afin d'établir un profil de corrosion de la pièce métallique. En fait, le dispositif selon l'invention nous permet de différencier, parmi les contraintes, celles qui sont dues à la corrosion de celles qui sont dues aux contraintes thermomécaniques. On peut ainsi établir un profil de corrosion de la pièce métallique et un profil thermomécanique séparés.

Pour être rendue mécaniquement solidaire de la structure, la pièce métallique peut par exemple être vissée sur la structure, en particulier lorsque la structure est métallique ; elle peut aussi être incorporée ou noyée dans le corps de la structure, lorsque le corps de la structure n'est pas métallique et que la structure comporte au moins une armature métallique, comme c'est le cas, par exemple, d'une structure en béton armé.

Dans le dispositif selon l'invention, la segmentation selon la direction longitudinale de la pièce métallique du dispositif permet d'obtenir une alternance de portions couvertes d'une couche de protection contre la corrosion et de portions non couvertes d'une couche de protection contre la corrosion, ces portions non couvertes étant ainsi susceptibles d'être corrodées en présence d'agents corrosifs. Cette alternance permet de discriminer l'influence thermomécanique de la pièce métallique (chargement, contraintes thermomécaniques dues à la dilatation de la structure) des effets mécaniques induits par la corrosion de cette pièce métallique. On peut ainsi soustraire l'influence de la déformation longitudinale à la déformation induite par la corrosion.

D'autre part, dans le dispositif selon l'invention, la fibre optique est dans un état précontraint en compression. Le fait que la fibre optique soit dans un état précontraint en compression nous permet de détecter l'apparition d'une corrosion par piqûres, ce type de corrosion ayant pour conséquence la rupture de cohésion de la pièce métallique sur laquelle la fibre est fixée et le relâchement de la précontrainte appliquée à la fibre optique.

Il est à noter que la structure métallique et l'armature métallique auxquelles nous faisons référence dans la présente description peuvent être en un métal ou en un alliage métallique.

Par ailleurs, on précise que, dans ce qui précède et ce qui suit, le terme *« longueur »*, lorsqu'il fait référence à un objet (par exemple, la pièce métallique ou les premières et secondes portions), s'entend comme la dimension dudit objet, dans la direction longitudinale de cet objet.

De préférence, les premières portions (couvertes) de la pièce métallique présentent des longueurs de quelques centimètres (c'est-à-dire typiquement de 1 cm à 5 cm), tandis que les secondes portions (découvertes) de la pièce métallique présentent des longueurs de quelques centimètres à quelques décimètres (c'est-à-dire typiquement de 1 cm à 20 cm).

Etant donné que les valeurs des longueurs des premières et secondes portions sont beaucoup plus petites que l'épaisseur de la structure (épaisseur d'un mur, par exemple, dans le cas d'un ouvrage de Génie Civil), on peut estimer que deux portions adjacentes sont soumises sensiblement à la même température et, par conséquent, que le gradient de température existant entre deux portions adjacentes est négligeable. Plus particulièrement, le gradient de température est quasi nul lorsque la pièce métallique instrumentée qui sert de capteur de corrosion est placée parallèle à la surface de la structure (gradient de température orienté de façon transverse) ; le gradient de température le plus élevé est quant à lui obtenu lorsque la pièce métallique instrumentée est placée perpendiculairement à la surface de la structure, alignée parallèlement au gradient, ce qui ne constitue pas la mise en oeuvre recommandée, mais même dans cette situation défavorable, l'effet d'un gradient de température pourra être négligé. A titre d'exemple, considérons un gradient de température de 10 K/m au travers de la paroi d'un pont, par exemple : la différence de température entre une portion couverte et une portion découverte, adjacente et séparée de 5 cm, n'est que de 0,5 K, entraînant une différence de déformation de seulement 10 microdéformations (environ) entre les deux portions en question.

Il est à noter que, dans ce qui précède et ce qui suit, nous utiliserons fréquemment l'expression « *pièce métallique instrumentée* » pour désigner un ensemble, selon l'invention, formé d'une pièce métallique et de moyens de transduction comprenant au moins une fibre optique fixée dans un état précontraint en compression sur la pièce métallique, ceci dans le but de simplifier la lecture de la description.

Selon une variante de l'invention, pour au moins un ensemble, la rainure dans laquelle est logée la fibre optique est également présente dans les secondes portions de la pièce métallique, la rainure étant pratiquée dans la surface extérieure de la pièce métallique.

En ce qui concerne la rainure, que celle-ci soit uniquement présente dans la couche en matériau de protection contre la corrosion (au niveau des premières portions) ou qu'elle soit à la fois présente dans cette couche (au niveau des premières portions) et dans la pièce métallique (au niveau des secondes portions), elle permet de loger la fibre optique et d'assurer une protection mécanique de la fibre. En étant logée dans la rainure, la fibre optique reste proche de l'interface formée par la pièce métallique et par la structure à étudier (interface fer-béton, par exemple, dans un ouvrage en béton armé comportant des armatures passives en fer) et peut donc assurer une détection précoce de la corrosion, tout en étant protégée mécaniquement.

Selon un mode de réalisation préféré de l'invention, pour au moins un ensemble, les premières et secondes portions adjacentes de la pièce métallique forment un motif périodique qui se répète selon la direction longitudinale de la pièce métallique. Selon ce mode de réalisation particulier, les premières et secondes portions de la pièce métallique, en plus d'être agencées de manière alternée selon la direction longitudinale, sont en outre agencées de manière périodique selon cette direction longitudinale. Ainsi, la pièce métallique est segmentée selon la direction longitudinale selon un motif de segmentation M périodique, avec $M = l_1/(l_1+l_2)$, où $l_1$ est la longueur d'une portion découverte selon la direction longitudinale et $l_2$ la longueur d'une portion couverte selon la direction longitudinale, la portion découverte et la portion couverte étant adjacentes.

Avantageusement, pour au moins un ensemble, l'état précontraint en compression de la fibre optique est obtenu grâce à la présence d'une couche en un matériau thermodurci qui recouvre la fibre optique et la comprime sur la pièce métallique lors de son refroidissement.

Il est à noter que l'homme du métier saura quel matériau thermodurcissable il devra choisir s'il veut obtenir une compression de la fibre optique, notamment en fonction de la valeur du coefficient de dilatation thermique de la fibre, sachant que c'est la différence existant entre les coefficients de dilatation thermique de la fibre et du matériau thermodurci qui permet d'obtenir la mise en compression de la fibre.

Il est à noter également que, lorsque la fibre optique est logée dans une rainure (premières portions et éventuellement secondes portions), sa mise en compression peut être obtenu en recouvrant la couche par un matériau thermodurci, qui comble partiellement ou complètement la rainure : la fibre optique ainsi recouverte se retrouve alors comprimée dans la rainure par le matériau thermodurci. De préférence, la fibre optique est intégralement noyée dans le matériau thermodurci (par exemple une résine d'enrobage telle qu'une résine époxyde).

De préférence, la rainure a une largeur millimétrique, voire submillimétrique. De préférence, la fibre optique qui est logée dans cette rainure est monomode et présente un diamètre de l'ordre de 150 micromètres (par exemple, une fibre ayant une gaine polyimide).

Selon un mode de réalisation particulier de l'invention, la pièce métallique de chaque ensemble du dispositif comporte des épaulements agencés selon la direction longitudinale de la pièce métallique. Les épaulements servent à sceller la pièce métallique dans le corps de la structure à surveiller, afin de garantir un bon couplage mécanique des efforts axiaux entre les deux matériaux. En effet, les épaulements permettent d'assurer une reprise d'effort suffisante entre le matériau de la structure à surveiller et le matériau de la pièce métallique. La présence des épaulements s'avère être nécessaire lorsque le ou les ensembles du dispositif selon l'invention doivent être incorporés ou noyés dans le corps de la structure à surveiller, comme c'est par exemple le cas d'une structure en béton armé. Par ailleurs, dans le cas d'une structure en béton armé, les épaulements servent aussi de protection de la fibre optique contre les agressions mécaniques extérieures (par exemple, contre les agrégats présents dans un ouvrage en béton armé).

De préférence, lorsque la structure est métallique, la pièce métallique de chaque ensemble est en un matériau similaire, de préférence identique, au matériau de la structure et, lorsque la structure n'est pas métallique et comporte au moins une armature métallique, la pièce métallique de chaque ensemble est en un matériau similaire, de préférence identique, au matériau de l'armature métallique (par exemple l'armature utilisée pour le renforcement d'un ouvrage en béton armé). En fait, il est préférable que le matériau métallique de la pièce métallique ait la même composition (on parle aussi de « même référence », par exemple FE 500) que le matériau métallique des armatures (ou de la structure, lorsque la structure est en un matériau métallique). Cependant, dans la pratique, il peut s'avérer difficile d'avoir exactement la même composition. Il est en effet peu probable que la pièce métallique instrumentée du dispositif selon l'invention et les armatures métalliques d'un ouvrage en béton armé, par exemple, soient issues de la même coulée. C'est la raison pour laquelle on parle également de compositions similaires, en gardant en mémoire que les compositions doivent être les plus proches possible, et de préférence être identiques, de manière à éviter l'apparition d'un effet de pile (électrode consommable).

Avantageusement, pour au moins un ensemble du dispositif, les moyens de transduction sont constitués par une fibre optique ou par des réseaux de Bragg, photoinscrits dans une fibre optique.

Selon une première variante, lorsque les moyens de transduction sont constitués par des réseaux de Bragg photoinscrits dans une fibre optique fixée sur une pièce métallique, chacune des premières et secondes portions de cette pièce métallique est associée à au moins un réseau de Bragg et les moyens de mesure et de traitement comportent un système optoélectronique de mesure permettant de mesurer la longueur d'onde de Bragg caractéristique de chacun des réseaux de Bragg photoinscrits dans la fibre optique.

Selon une deuxième variante, lorsque les moyens de transduction sont constitués par une fibre optique, les moyens de mesure et de traitement appliquent une technique de mesure par réflectométrie Rayleigh OFDR à cette fibre optique, la résolution de mesure de cette technique étant choisie centimétrique et inférieure à la plus petite des premières et secondes portions de la pièce métallique sur laquelle est fixée la fibre optique. Il est à noter que, lorsqu'on utilise une technique de mesure OFDR, la fibre optique sert simultanément de transducteur et de canal de mesure.

Selon un mode de réalisation particulier, le dispositif selon l'invention comprend plusieurs ensembles, lesdits ensembles étant reliés en parallèle et/ou en série. A titre d'exemple, plusieurs ensembles peuvent être reliés orthogonalement, placés en série et en parallèle, espacés d'une distance de l'ordre du mètre par exemple, afin de couvrir une surface importante pouvant atteindre plusieurs milliers de mètres carrés. Il est également possible de placer les ensembles à différentes profondeurs au sein de la structure à contrôler, afin de permettre à l'exploitant d'obtenir des informations sur la cinétique d'avancée de la corrosion (avancée du front de carbonatation ou de chlorures).

L'invention a aussi pour objet une utilisation d'un dispositif tel que défini ci-dessus pour la détection de la corrosion au sein d'une structure comprenant un corps principal, métallique ou en béton, et une ou plusieurs armatures métalliques, au moins une des armatures métalliques étant constituée par la pièce métallique d'un ensemble dudit dispositif.

La pièce métallique du dispositif selon l'invention peut ainsi remplacer l'une des armatures métalliques d'une structure métallique ou en béton, par exemple remplacer l'une des armatures passives servant à renforcer un ouvrage en béton armé. Dans ce cas, il est alors préférable que la pièce métallique instrumentée qui sert de capteur de corrosion assure la même fonction de renforcement que l'armature passive à laquelle elle se substitue et qu'elle ne modifie pas le schéma de renforcement de la structure. En outre, il est préférable que le métal composant la pièce métallique soit similaire, et de préférence identique, à celui des armatures de la structure, afin d'éviter un effet de pile (électrode consommable). On peut par exemple utiliser des pièces métalliques en acier au carbone dans des ouvrages de génie civil renforcés par des armatures du même métal.

L'invention a également pour objet une utilisation d'un dispositif tel que défini ci-dessus comme témoin de corrosion pour une structure métallique, la pièce métallique de chaque ensemble du dispositif étant fixée à la surface de la structure. Dans ce cas, il est préférable que la ou les pièces métalliques du dispositif soient en un même matériau que la structure métallique (le plus souvent à base d'alliages d'aluminium), afin d'éviter un effet de pile (électrode consommable).

Enfin, l'invention a pour objet un procédé de détection et de localisation de la corrosion sur une pièce métallique d'un ensemble d'un dispositif tel que défini ci-dessus, ladite pièce étant rendue solidaire mécaniquement d'une structure métallique ou comprenant au moins une armature métallique, le procédé comprenant, pour chaque ensemble, les étapes suivantes :

- la mesure de l'évolution de l'amplitude de la réponse spectrale au cours du temps pour chacune des premières et secondes portions de la pièce métallique (cette étape permet de suivre l'évolution de la déformation au cours du temps de la pièce métallique) ;
- la détermination de la contribution de la corrosion sur l'évolution de l'amplitude de la réponse spectrale au cours du temps par comparaison entre les amplitudes de réponses spectrales de premières et secondes portions adjacentes (cette étape permet de différencier les déformations d'origine thermomécanique des déformations dues à la corrosion, afin d'isoler la composante des déformations uniquement due à la corrosion) ;
- si la contribution de la corrosion sur l'évolution de l'amplitude est supérieure, en valeur absolue, à une valeur seuil sur au moins l'une des secondes portions de la pièce métallique, la détermination de la présence de corrosion sur ladite au moins une seconde portion (en sachant sur quelle seconde portion a lieu la corrosion, on peut connaitre la localisation de la corrosion sur la pièce métallique) ; et
- éventuellement, la détermination du type de corrosion selon le signe de l'évolution de l'amplitude (on peut en effet déduire le type de corrosion grâce au signe de l'évolution de l'amplitude, qui dépend de la contrainte appliquée, qui résulte soit d'un relâchement de la précontrainte de compression (corrosion par formation de chlorures dans la pièce métallique, provoquant une attaque par piqures de la pièce métallique), soit d'une compression qui se superpose à la précontrainte de compression (corrosion de la pièce métallique due à la carbonatation du béton, provoquant une expansion des produits de corrosion (oxyde de fer)). Il est à noter que, dans les structures métalliques, le phénomène de corrosion par carbonatation n'existe pas ; il n'est donc possible de détecter que la présence d'une corrosion par piqûres.

Comme la pièce métallique de chacun des ensembles du dispositif de mesure selon l'invention est segmentée selon la direction longitudinale en une alternance de premières et secondes portions et que chacune des premières et secondes portions est associée à au moins un transducteur, il est possible de détecter rapidement l'apparition de la corrosion en tout point le long de la pièce métallique et de localiser quelle portion de la pièce métallique est attaquée par la corrosion.

Dans le procédé selon l'invention, on mesure soit un décalage de longueur d'onde de Bragg, soit un décalage de fréquence OFDR, réparti sur l'intégralité de la pièce métallique de chacun des ensembles du dispositif. Ces décalages sont induits par des effets mécaniques liées à la corrosion intervenant sur les secondes portions de la pièce métallique de chacun des ensembles du dispositif (les secondes portions de la pièce métalliques étant non recouvertes par une couche de protection contre la corrosion et étant donc sujettes à la corrosion), mais aussi par des effets thermomécaniques imposés par la structure ; il s'avère donc nécessaire de discriminer ces deux effets, afin de déterminer la présence et l'importance de la corrosion. La localisation et la mesure de l'amplitude de la corrosion le long de la pièce métallique de chacun des ensembles du dispositif sont déterminées par un procédé de calcul (pondération et soustraction) appliqué aux profils de déformations mesurés sur les premières portions et sur les secondes portions.

Lorsque la fibre optique de l'ensemble est précontrainte en compression sur la pièce métallique, les secondes portions et les moyens de transduction coopèrent de manière à ce que l'apparition de corrosion dans au moins l'une des secondes portions de la pièce métallique se traduit par une augmentation ou une diminution de la contrainte en compression dans au moins un transducteur associé à cette seconde portion. En fait, selon les agents corrosifs en action au sein de la structure, la corrosion se manifeste par un relâchement de la contrainte en compression préétablie ou par l'apparition d'une compression supplémentaire qui s'ajoute à la compression préétablie.

Le dispositif selon l'invention présente de nombreux avantages.

Tout d'abord, contrairement aux CFO décrits dans l'art antérieur, le dispositif selon l'invention fournit une mesure répartie (mode OFDR) ou distribuée (mode Bragg) le long de chaque pièce métallique du dispositif, instrumentée par une fibre optique.

L'apparition de corrosion se manifeste par une modification du profil de contraintes appliquées à la fibre optique, détectable sur toute la longueur de la pièce métallique sur laquelle est fixée la fibre optique. La corrosion est donc détectable sur toute la longueur de la pièce métallique (qui est typiquement de quelques mètres à quelques dizaines de mètres) et non plus en un point seulement.

Le dispositif selon l'invention permet en outre de suivre la progression de la corrosion tout au long de chacune des pièces métalliques du dispositif et à long terme.

Le dispositif selon l'invention permet d'atteindre une couverture spatiale importante compatible avec les grandes surfaces exposées des structures, telles que les ouvrages du Génie Civil.

Il permet également de réaliser un diagnostic *in-situ* et en profondeur au sein de la structure, ainsi que dans ses fondations, zones inaccessibles à l'observation. En effet, chaque ensemble du dispositif (pièce métallique équipée d'une fibre optique et de moyens de transduction) peut être noyé dans la structure à surveiller et on peut obtenir une mesure *in situ* de la corrosion. Le ou les ensembles du dispositif peuvent être noyés dans la structure proche de la surface et à différentes profondeurs dans l'épaisseur de la structure, ainsi que dans ses fondations, permettant ainsi une analyse de l'évolution de la corrosion sur le long-terme.

Par ailleurs, chaque pièce métallique du dispositif peut prendre la place d'une armature métallique dans une structure et conserver la fonction de renforcement de cette armature.

Enfin, le dispositif selon l'invention permet d'obtenir des informations sur le type de corrosion (chlorures ou carbonatation/sulfatation), sur sa localisation dans la structure et sur sa cinétique de progression à l'intérieur de la structure (principalement l'avancée du front de carbonatation ou de chlorures).

Au final, le dispositif selon l'invention peut donc être mis en oeuvre dans le cadre d'une maintenance conditionnelle.

Un autre avantage du dispositif selon l'invention est que ses éléments constitutifs sont peu coûteux et faciles à installer dans la structure, ce qui permet une économie future en termes de coût de maintenance des structures justifiant le déploiement d'un tel dispositif à grande échelle dans les futurs ouvrages de Génie Civil en projet de construction.

L'invention sera mieux comprise et d'autres avantages et particularités apparaîtront à la lecture de la description qui va suivre, donnée à titre d'exemple non limitatif, accompagnée des figures annexées.

**BRÈVE DESCRIPTION DES FIGURES**

La figure 1 représente, de manière schématique et selon une vue longitudinale, un premier exemple de réalisation de l'ensemble, représenté seul, du dispositif de mesure selon l'invention.
La figure 2a représente une vue en coupe longitudinale de l'ensemble représenté dans la figure 1.
La figure 2b représente une vue en coupe, selon la droite AA, de l'ensemble représenté dans la figure 2a.

La figure 2c représente une vue en coupe, selon la droite BB, de l'ensemble représenté dans la figure 2a.

La figure 3 représente, de manière schématique et selon une vue longitudinale, un deuxième exemple de réalisation de l'ensemble, représenté seul, du dispositif de mesure selon l'invention.

La figure 4a représente une vue en coupe longitudinale de l'ensemble représenté dans la figure 3.

La figure 4b représente une vue en coupe, selon la droite AA, de l'ensemble représenté dans la figure 4a.

La figure 4c représente une vue en coupe, selon la droite BB, de l'ensemble représenté dans la figure 4a.

Les figures 5a à 5c représentent les étapes du procédé de réalisation d'un ensemble du dispositif selon l'invention, selon un mode de réalisation particulier.

Les figures 6a à 6e représentent les étapes du procédé de réalisation d'un ensemble du dispositif selon l'invention, selon un autre mode de réalisation particulier.

La figure 7 représente, de manière schématique, un exemple d'installation d'un dispositif selon l'invention au sein d'un ouvrage de génie civil.

La figure 8 représente, de manière schématique, un autre exemple d'installation d'un dispositif selon l'invention au sein d'un ouvrage de génie civil.

La figure 9 est un diagramme type illustrant un diagnostic de corrosion et/ou de fissuration dans une structure en béton armé en fonction des plages de valeurs de l'amplitude de déformations mesurée dans une fibre optique.

On précise que les différents éléments illustrés dans les figures ci-dessus ne sont pas représentées à l'échelle.

On précise également que les mêmes références sont utilisées pour désigner des éléments ayant sensiblement la même fonction.

## EXPOSÉ DÉTAILLÉ DE MODES DE RÉALISATION PARTICULIERS

### 1-Eléments constitutifs du dispositif de mesure selon l'invention

Le dispositif de mesure 10 selon l'invention comporte, d'une part, au moins un ensemble 1, formé d'une pièce métallique 2, qui s'étend selon une direction longitudinale, et de moyens de transduction 4 comprenant une fibre optique 3, et comporte, d'autre part, des moyens de mesure et de traitement 5.

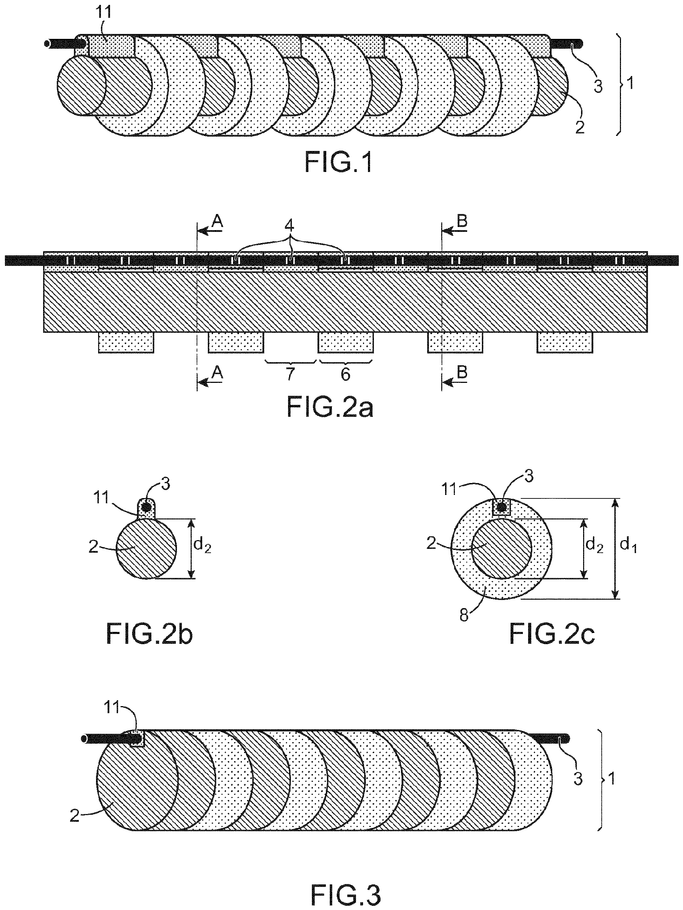

Cet ensemble 1 est représenté en détails et selon plusieurs modes de réalisation de l'invention dans les figures 1, 2a, 2b, 2c, 3, 4a, 4b et 4c.

Dans les figures 1, 2a, 2b et 2c, la pièce métallique 2 est une barre métallique de diamètre constant.

Sur sa surface sont disposées des anneaux, qui sont formés en recouvrant certaines portions de la surface de la pièce métallique (correspondant aux premières portions 6) par une couche 8 en un matériau de protection contre la corrosion. Dans ces anneaux, on réalise une rainure 9, dans laquelle est placée une fibre optique 3. Comme on peut le voir dans la figure 1, la fibre optique 3 s'étend sur toute la longueur de la pièce métallique.

La fibre optique 3 est fixée dans un état précontraint en compression sur la surface de la pièce métallique 2, cet état précontraint en compression pouvant par exemple être obtenu en collant à chaud la fibre optique sur la pièce métallique.

Comme on peut le constater dans la figure 2c, la fibre optique 3 est protégée mécaniquement lorsqu'elle est précontrainte en compression dans la rainure 9, c'est-à-dire lorsqu'elle se trouve dans les premières portions 6 de la pièce métallique. Lorsqu'elle se trouve dans les secondes portions 7 de la pièce métallique, la fibre est protégée mécaniquement par la couche 11 qui englobe la fibre et qui est utilisée pour la contraindre en compression (figure 2b).

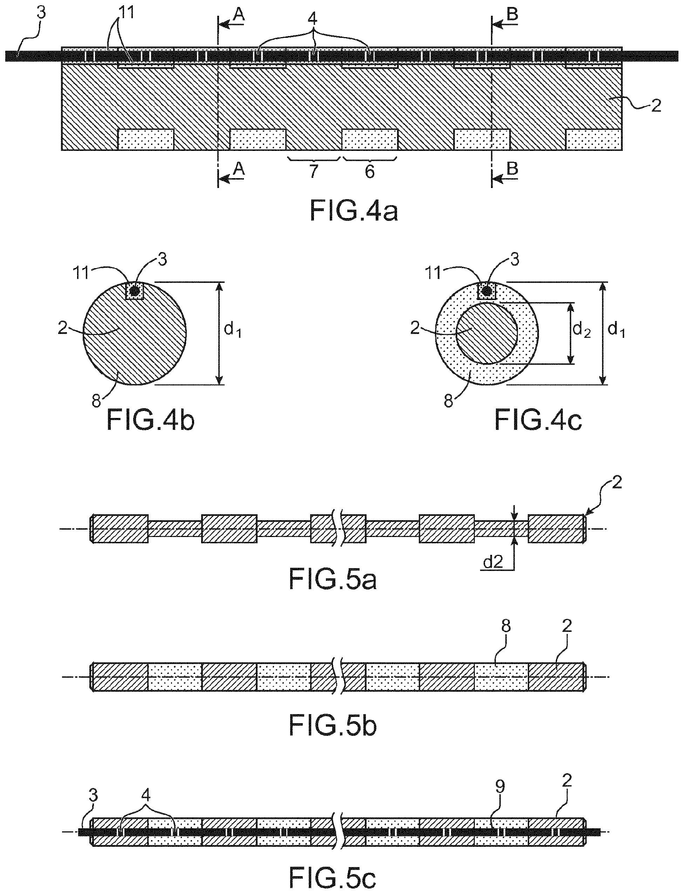

Dans les figures 3, 4a, 4b et 4c, la pièce métallique 2 est une barre métallique ayant un diamètre $d_1$ dans les secondes portions 7 et un diamètre $d_2$ inférieur à $d_1$ dans les premières portions 6 (portions recouvertes par la couche 8 de protection contre la corrosion). La fibre optique 3 est logée dans une rainure 9 qui s'étend entre les deux extrémités longitudinales de la pièce métallique.

Comme on peut le constater dans les figures 4a, 4b et 4c, cette rainure est pratiquée dans la surface extérieure de la pièce métallique lorsqu'on se trouve dans les secondes portions 7 de la pièce métallique (portions destinées à subir la corrosion) (figure 4b), alors qu'elle est pratiquée dans la couche 8 de protection contre la corrosion lorsqu'on se trouve dans les premières portions 6 de la pièce métallique (figure 4c).

Dans les premières et secondes portions, la fibre optique est recouverte par une couche 11 qui comprime la fibre optique vers la pièce métallique et la noie dans la rainure.

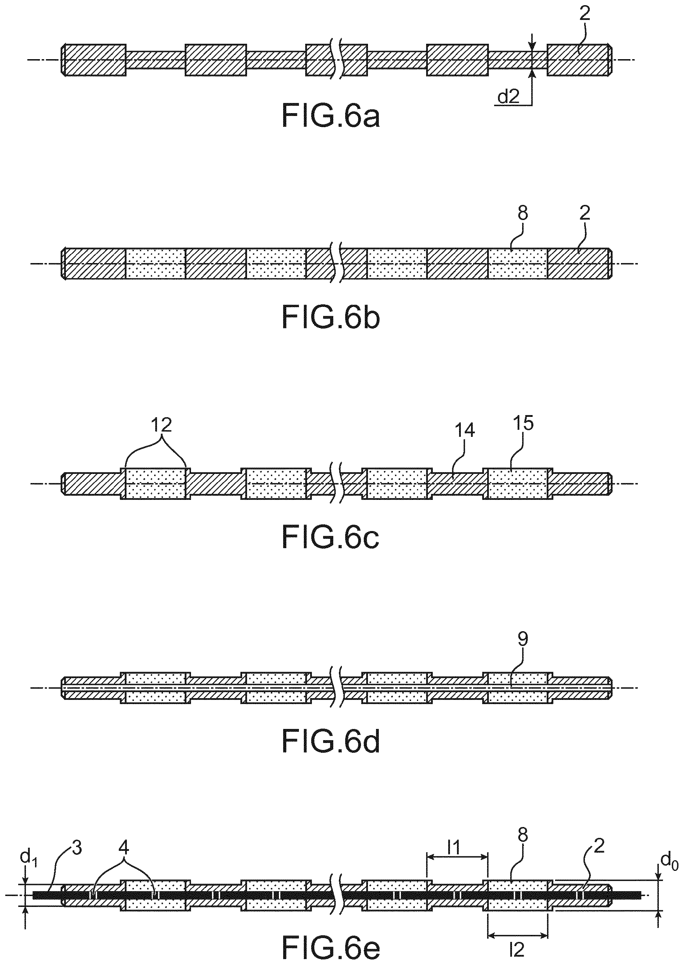

Dans les figures 2a et 4a (ainsi que dans les figures 5c et 6e ci-après), on constate qu'il y a bien au moins un moyen de transduction 4 par premières portions 6 et par secondes portions 7.

Il est à noter que chacun des ensembles représentés dans les figures 1 3 et 6e pourrait convenir à une utilisation dans une structure métallique, mais que l'ensemble représenté dans la figure 1 ne pourrait absolument pas convenir à une utilisation dans une structure en béton armé en raison de l'absence d'épaulements métalliques.

### 1.1-Pièce métallique

La pièce métallique 2 a avantageusement la forme d'une barre cylindrique pleine de section droite circulaire. Plus particulièrement, l'élément métallique est avantageusement une armature en fer ou en acier, de forme cylindrique à section droite circulaire, dont le diamètre est compris entre 5 et 16 mm. L'élément métallique peut toutefois avoir d'autres formes et d'autres sections droites (carrée, rectangulaire, hexagonale...).

De préférence, la longueur de l'élément métallique est de l'ordre métrique ou décamétrique.

### 1.2-Fibre optique

En ce qui concerne le choix de la fibre optique 3, il peut s'agir d'une fibre monomode, par exemple une fibre en silice utilisée en télécommunications optiques (standard télécommunication, par exemple les fibres SMF-28), éventuellement gainée, par exemple avec de l'époxy-acrylate ou du polyimide, voire ormocer (pour « Organically Modified Ceramics ») selon la température de polymérisation du polymère thermodurcissable utilisé pour comprimer la fibre.

Dans le cas où une fibre optique monomode est utilisée, les signaux enregistrés permettent d'obtenir un profil de déformation constitué d'un profil de corrosion et d'un profil thermomécanique (effet global de la température et de la déformation axiale).

Il est également possible d'utiliser des fibres « à maintien de polarisation » qui présentent une biréfringence importante obtenue par fabrication (fibres de type PANDA, à coeur elliptique ou « Bow-Tie » (noeud papillon)). Dans ce cas, les signaux enregistrés permettent d'obtenir simultanément le profil de corrosion, le profil de déformations longitudinales et le profil thermique de la pièce métallique sur laquelle est fixée la fibre optique. On peut alors séparer le profil de température du profil de déformation grâce à un système matriciel du second degré tel que décrit par Frogatt et al. dans « Distributing strain and temperature discrimination in unaltered polarization maintaining fiber », Optical Fiber Sensors Conference 2006, OFS 18, Cancun (référence [3]).

### 1.3-Moyens de transduction

Les moyens de transduction 4 peuvent être constitués par la fibre optique 3 elle-même. Dans ce cas, il faut que la résolution des moyens de mesure et de traitement utilisés (en l'occurrence la technique OFDR) soit inférieure à la longueur de la plus petite portion parmi les premières et secondes portions, afin qu'il y ait bien au moins un moyen de transduction par portion, c'est-à-dire au moins un point de mesure par portion.

Les moyens de transduction 4 peuvent également être constitués par des réseaux de Bragg. Dans ce cas, il faut qu'il y ait au moins un réseau de Bragg par portion (que ce soient les premières portions 6 ou les secondes portions 7), afin qu'il y ait au moins un moyen de transduction par portion, c'est-à-dire au moins un point de mesure par portion.

On rappelle qu'un réseau de Bragg est un réseau de diffraction qui est obtenu par photo-inscription au sein du coeur d'une fibre optique. Un réseau de Bragg se présente sous la forme d'un motif périodique d'indice, qui a un pas submicrométrique et une longueur de quelques millimètres (typiquement 5 mm), et qui réfléchit la lumière à une longueur d'onde particulière (dite longueur d'onde de Bragg).

### 1.4-Moyens de mesure et de traitement

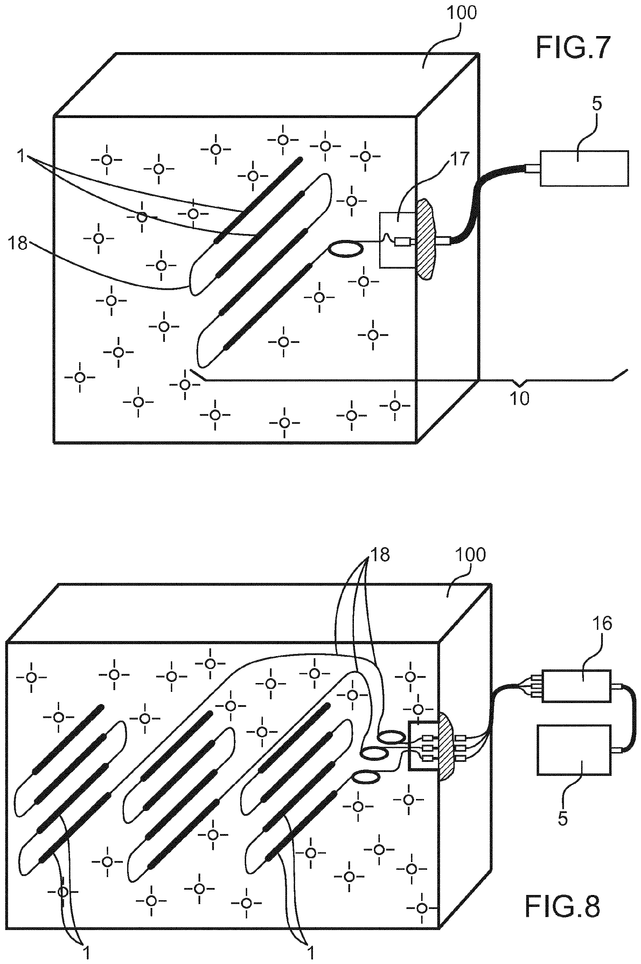

Les moyens de mesure et de traitement 5 sont de préférence déportés à l'extérieur de la structure 100 à surveiller (figure 7).

De préférence, les moyens de mesure et de traitement 5 sont mutualisés et une seule instrumentation de lecture est utilisée pour mesurer les données provenant de chacun des moyens de transduction 4 de chaque fibre optique 3 du ou des ensembles 1 du dispositif de mesure 10 de la corrosion selon l'invention (figure 8).

Les moyens de mesure et de traitement peuvent être résidents (c'est-à-dire installés en permanence à proximité de la structure 100 à surveiller) ou peuvent être nomades (c'est-à-dire déplacés de structures en structures lorsqu'on souhaite réaliser des mesures de la corrosion).

• Procédé OFDR

Lorsque les moyens de transduction 4 sont constitués par la fibre optique 3 elle-même, les moyens de mesure et de traitement 5 appliquent une technique OFDR (pour « Optical Frequency Domain Reflectometry » en anglais) ou technique de réflectométrie optique dans le domaine fréquentiel.

Le principe de la technique de mesure OFDR est connu (voir par exemple l'article de Froggatt et al., « High-spatial resolution distributed strain measurement in optical fiber with Rayleigh scatter », Applied Optics 1998, 37(10), 1735-1740 (référence [4])) et n'est donc pas décrit ici en détail. En quelques mots, la technique OFDR consiste à injecter la lumière d'un laser monomode, accordable et émettant en régime continu, dans le coeur d'une fibre optique (de préférence monomode) et à mesurer la quantité de lumière rétrodiffusée (Rayleigh).

Cette technique OFDR permet d'adresser un continuum de points de mesure tout au long de la fibre optique, selon une résolution spatiale centimétrique et avec une portée qui est actuellement de 70 mètres (limite actuelle de l'instrumentation de lecture, améliorable dans le futur), ces points étant identifiés dans le domaine spatial par une relation mathématique de type Transformée de Fourier inverse.

L'utilisation de la technique ODFR nécessite de réaliser deux opérations importantes sur la fibre optique 3 avant de la fixer à la pièce métallique 2 pour former une pièce métallique instrumentée (ensemble 1) pour le dispositif de mesure 10 selon l'invention.

D'une part, il est nécessaire d'enregistrer un profil de rétrodiffusion OFDR « natif » de la fibre optique, avant collage.

D'autre part, il faut éliminer toutes sources de rétrodiffusions importantes susceptibles de saturer le détecteur chargé de mesurer la quantité de lumière rétrodiffusée. Ainsi, la fibre optique est avantageusement clivée en biais en extrémité pour supprimer la réflexion de Fresnel.

La localisation des évènements sur la pièce métallique s'effectue grâce au profil de fréquence OFDR déterminé à partir du calcul d'intercorrélation entre le profil natif de rétrodiffusion de la fibre et celui de l'ensemble formé par la fibre collée et précontrainte sur la pièce métallique. Le profil de déformation de précontrainte fait alors apparaitre la zone précontrainte correspondant à la totalité de la portion de fibre recouverte par - de préférence noyée dans - un matériau thermodurcissable (par exemple de la colle), lorsque l'état précontraint de la fibre est obtenu par polymérisation à chaud.

La position dans l'espace du front de ce profil peut alors servir de repère local afin de localiser les points de mesure le long de la pièce métallique 2 de façon relative, indépendamment de la longueur du déport entre les moyens de transduction 4 (localisation des différents points de mesure) et les moyens de mesure et de traitement 5 (instrumentation de lecture), qui peut évoluer au cours du suivi de l'ouvrage (modification du câblage optique).

• Procédé de Bragg

Lorsque les moyens de transduction 4 sont des réseaux de Bragg, les moyens de mesure et de traitement comportent un système optoélectronique de mesure permettant de mesurer la longueur d'onde de Bragg caractéristique de chacun des réseaux de Bragg.

Le procédé de mesure Bragg permet d'adresser une pluralité de points de mesure couvrant chacun une zone millimétrique, distribués en différentes zones choisies le long de la pièce métallique et souvent identifiés dans le domaine spatial par une correspondance distance-longueur d'onde (multiplexage spectral).

Pour rappel, une fibre optique muni d'un réseau de Bragg et fixée sur un support métallique forme un capteur à fibre optique (CFO). L'ensemble 1 décrit dans la présente invention et comprenant une fibre optique 3 munie de multiples réseaux de Bragg et fixée en précontrainte sur une pièce métallique 2 est équivalent à une multitude de CFO reliés en série. Or le principe de fonctionnement des CFO à réseaux de Bragg est décrit dans de nombreuses publications (voir par exemple l'article de P. Ferdinand intitulé « Capteurs à fibres optiques à réseaux de Bragg », Techniques de l'ingénieur 2001, R6735, 1-24 (référence [5])) et ne sera donc pas détaillé ici.

En quelques mots, le principe de la technique de mesure Bragg consiste à mesurer le décalage de cette longueur d'onde de Bragg par rapport à un état de référence, en fonction de la température ou de l'état de déformation local à l'endroit du réseau de Bragg étudié. Pour cela, on effectue la soustraction entre la longueur d'onde de Bragg mesurée et la longueur d'onde de référence, mesurée lors de la phase de calibrage. Il s'agit fondamentalement d'une mesure spectrométrique, insensible aux perturbations de couplage (connexion, transmission optique par la fibre optique de déport reliant la fibre optique munie des réseaux de Bragg aux moyens de mesure, etc.), ce qui rend ce procédé de mesure particulièrement robuste sur le terrain, en conditions industrielles.

Il existe plusieurs méthodes de lecture de longueur d'onde de Bragg, mais on préfère utiliser la méthode de mesure la plus connue et la plus répandue : la mesure spectrale. Cette méthode de lecture met en oeuvre une source large émettant aux alentours de 1,55 $\mu$m, ainsi qu'un spectromètre conventionnel basé sur un réseau de diffraction ou sur un procédé de transformation de Fourier, qui enregistre les spectres des réseaux de Bragg présents sur la fibre optique.

La détermination précise des longueurs d'onde s'effectue le plus souvent par une méthode de traitement du signal du type calcul de mi-hauteur ou bien par un ajustement mathématique de la réponse du réseau (par exemple, la méthode des moindres carrés (maximum de vraisemblance)).

Comme les réseaux de Bragg sont des transducteurs multiplexables dans le domaine spectral, il est possible de placer en série, et sur la même fibre optique, une pluralité de réseaux de Bragg de longueurs d'onde différentes. La localisation des réseaux de Bragg sur la fibre optique (et, par voie de conséquence, sur la pièce métallique solidaire de la fibre optique) est déterminée par leur longueur d'onde. La localisation des évènements sur la pièce métallique s'effectue donc par une correspondance entre la longueur d'onde et la position (multiplexage spectral).

A titre d'exemple, considérons le cas où les réseaux de Bragg sont soumis à la même température (ce qui correspond à une insertion dans un ouvrage de génie civil de large dimension) et soumis à une gamme de déformations de plus ou moins 1000 microdéformations (ce qui correspond aux conditions typiques appliquées aux armatures de renforcement ou aux extensomètres à corps d'épreuve en acier). La gamme de longueurs d'onde correspondante est 1,2 nm par réseau de Bragg (le coefficient de conversion vaut 1,2 pm $(1,2.10^{-12}$m) par microdéformation pour une source à 1,55 $\mu$m). Comme l'étendue spectrale de la source peut atteindre 80 nm (bande télécom étendue dite « C + L »), le nombre de réseaux de Bragg multiplexables sur une seule fibre optique peut donc atteindre 60 à 70 par pièce métallique.

A titre d'exemples, une telle capacité de 70 réseaux de Bragg (soit 35 motifs de segmentation) permettrait d'atteindre une longueur totale de pièce métallique instrumentée de 140 cm, dans le cas d'une période de 40 mm et d'un motif de segmentation de 18/40, ou encore de 3,5 mètres, dans le cas d'une période de 100 mm et d'un motif de segmentation de 80/100.

2-Exemples de réalisation d'une pièce métallique instrumentée par une fibre optique munie de moyens de transduction pour un dispositif de mesure de corrosion selon l'invention

Un premier exemple de réalisation est décrit dans les figures 5a à 5c et permet d'obtenir l'ensemble représenté dans la figure 3.

Dans cet exemple de réalisation, la pièce métallique 2 est obtenue en travaillant à partir d'un bloc de matière qui a la forme d'une tige métallique de section circulaire ayant un diamètre $d_0$, par exemple une armature.

Tout d'abord, la tige métallique est moulée, usinée ou forgée, par exemple par matriçage, afin de former des segments cylindriques de diamètre $d_2$ inférieur au diamètre initial $d_0$ (figure 5a).

Puis, la pièce métallique 2 ainsi obtenue est revêtue d'un matériau de protection contre la corrosion sur toute sa longueur, au diamètre $d_0$, pour former une couche 8 (figure 5b).

Enfin, la pièce métallique 2 est rainurée sur toute sa longueur par fraisage ou rainurage et on place une fibre optique 3 dans la rainure, la fibre étant dans un état précontraint en compression (figure 5c).

Il est à noter que, contrairement aux ensembles représentés dans les figures 1 et 3, l'ensemble illustré dans la figure 5c est représenté selon une vue de dessus, ce qui permet d'observer la fibre logée dans la rainure.

Plus de détails sur la manière de procéder pour réaliser l'usinage de la pièce métallique, les matériaux à utiliser, etc. sont disponibles dans la description ci-dessous du second exemple de réalisation. Ces détails sont bien sûr également utilisables pour le premier exemple de réalisation.

Le second exemple de procédé est décomposé en cinq étapes principales, illustrées dans les figures 6a à 6e :

- premier chariotage d'un bloc de matière métallique (figure 6a) ;
- dépôt d'une résine d'enrobage par procédé de pultrusion ou de poudrage électrostatique (figure 6b) ;
- second chariotage du bloc de matière (figure 6c) ;
- rainurage sur toute la longueur du bloc de matière (figure 6d) ;
- placement de la fibre au fond de la rainure, application d'une colle (par exemple, une résine époxy ou une colle cyanoacrylate) et polymérisation à chaud (figure 6e).

Comme dans le premier exemple de réalisation, la pièce métallique 2 est obtenue en travaillant à partir d'un bloc de matière ayant la forme d'une tige métallique de section circulaire, par exemple une armature.

Lors d'une première étape, un bloc de matière est moulé, usiné ou forgé, par exemple par matriçage, avantageusement de façon périodique sur toute sa longueur, afin de former une pièce métallique 2 ayant des segments cylindriques de diamètre $d_2$ inférieur au diamètre initial $d_0$ de la pièce métallique (figure 6a). Ceci n'est toutefois nullement limitatif : les segments de diamètre $d_0$ et les segments de diamètre $d_2$ se suivent par alternance, mais ne sont pas obligatoirement périodiques et peuvent présenter des longueurs différentes.

Dans le cadre de ce second exemple de réalisation, nous nous plaçons dans le cas particulier d'un motif périodique : les longueurs des segments découverts 14 et couverts 15 sont appelées $l_1$ et $l_2$ respectivement et L est la période du motif segmenté avec $L = l_1 + l_2$.

Le motif de segmentation est défini comme la proportion de longueur découverte :

$$M = \frac{l_1}{L}$$

A titre d'exemple, ce motif de segmentation présente une période de 40 mm, et les valeurs de $l_1$ et $l_2$ sont respectivement égales à 18 mm et 22 mm. La valeur du motif de segmentation est donc proche de 0,5 (18/40). Cet exemple n'est toutefois nullement limitatif et une valeur différente peut également être préférée. Par exemple, lorsque les moyens de transduction sont des réseaux de Bragg, il est particulièrement intéressant de choisir une valeur proche de 0,8 ou 0,9, afin d'accroître la portée de la mesure.

De préférence, on choisira une valeur de $l_2$ proche de 2 cm et une valeur de $l_1$ ajustable entre 2 cm et 20 cm (de manière à obtenir un motif M compris entre 0,5 et 0,9 environ).

Toujours à titre d'exemple, la pièce métallique 2 présente un diamètre initial $d_0$ = 10 mm et un diamètre réduit $d_2$ = 6 mm.

Lors d'une seconde étape, la pièce métallique est revêtue d'un matériau de protection contre la corrosion sur toute sa longueur, au diamètre $d_0$, pour former une couche 8 (figure 6b).

Différents matériaux peuvent être utilisés pour former la couche 8, et en particuliers les polymères thermodurcissables ; il est toutefois avantageusement d'utiliser des matériaux polymères résistants aux bases (pH supérieur à 13), aux hautes températures (supérieures à 120°C) et présentant une faible absorption d'humidité.

Le polymère dur pour former la couche 8 peut ainsi être choisi parmi les résines thermodurcissables telles que les polyesters qui sont abondamment utilisées pour la réalisation de bateaux, piscines ou cuves. Il peut également être choisi parmi les résines vinylesters, qui sont intéressantes en vertu de leur résistance à la corrosion. Enfin, les résines époxydes sont également exploitables, mais sont plus coûteuses.

Pour procéder au revêtement de la pièce métallique, il est possible d'utiliser une machine à pultruder (pultrudeuse). Pour rappel, une pultrudeuse comprend un injecteur de polymère, un préformeur adapté à la forme de la pièce (ici, un alésage de diamètre $d_0$ = 10 mm), un four à induction chauffant localement la pièce métallique et permettant de polymériser le matériau déposé. La pièce métallique est tractée au travers de la pultrudeuse de manière à ce que le polymère thermodurcissable puisse être injecté dans les parties usinées de la pièce métallique.

Pour procéder au revêtement de la pièce métallique, il est également possible de la placer sur un convoyeur et de la faire passer au travers d'un banc de poudrage électrostatique (un banc de poudrage électrostatique étant composé d'une section de préparation de surface (par grenaillage), d'un four à induction, d'un tunnel d'application du polymère thermodurcissable, sous forme de poudre, par poudrage électrostatique et finalement d'une zone de refroidissement). La réticulation de la poudre intervient dès qu'elle atteint la pièce métallique préchauffée. Dans ce cas, le polymère thermodurcissable est le plus souvent une résine époxyde, éventuellement revêtue d'une couche de polyéthylène à haute densité (PEHD), le PEHD étant adapté aux environnements salins et basiques.

Lors d'une troisième étape, la pièce métallique ainsi revêtue est de nouveau chariotée sur les segments laissés découverts sur un diamètre $d_1$ (soit 9 mm dans l'exemple illustré) : on obtient les segments découverts 14 de diamètre $d_1$.

De préférence, on prend soin de laisser un épaulement 12 de chaque côté (par exemple de hauteur 0,5 mm) (figure 6c).

Lors d'une quatrième étape, la pièce métallique est rainurée sur toute sa longueur par fraisage ou rainurage (figure 6d). Dans notre exemple de réalisation, nous avons choisi de réaliser une rainure 9 de 1,5 mm de profondeur et de 1 mm de largeur, mais d'autres choix de valeurs sont possibles.

Lors d'une cinquième étape, on place une fibre optique 3 dans la rainure et on la maintient non tendue au fond de la rainure, par exemple à l'aide de points de colle ou d'une pate de fixation.

La pièce métallique munie de la fibre fixée est alors insérée au sein d'un four tubulaire (par exemple un four inductif) qui élève sa température entre 80°C et 140°C (le choix de la température se faisant en fonction du type de matériau que l'on souhaite déposer sur la fibre optique pour la contraindre en compression). La pièce métallique est placée en translation, à une vitesse compatible avec le temps de montée en température de la pièce métallique et la durée de polymérisation du matériau que l'on souhaite déposer sur la fibre optique (typiquement quelques minutes par mètre).

Comme matériau permettant de contraindre en compression la fibre optique sur la pièce métallique, on peut choisir un matériau thermodurcissable.

Immédiatement en sortie du four, on injecte le matériau thermodurcissable dans la rainure, de préférence jusqu'à ras-bord afin d'assurer un futur contact mécanique entre le matériau de la pièce métallique et le matériau du corps de l'ouvrage à surveiller (par exemple, un contact mécanique entre l'acier et le béton lorsque la pièce métallique est en acier et que la structure à surveiller est en béton). On peut par exemple utiliser une buse d'injection qui permet de délivrer un flux continu, adapté à la vitesse de translation de la pièce métallique.

Dès que le matériau thermodurcissable entre en contact avec la pièce métallique chauffée, le matériau thermodurcissable passe par un état de grande fluidité qui lui permet de combler l'espace entre la pièce métallique et la fibre et former une couche 11 autour de la fibre optique, juste avant de polymériser à haute température, en sortie de four.

Finalement, la pièce métallique se refroidit progressivement au fur et à mesure de son évacuation en dehors du four et la fibre optique se trouve alors précontrainte en compression en raison de la grande différence de coefficient de dilatation entre la pièce métallique et la fibre ($\alpha_{acier} \approx 12.10^{-6}$/K et $\alpha_{SiO2} \approx 0,5.10^{-6}$/K) (figure 6e).

A titre d'exemple, le matériau thermodurcissable utilisé pour former la couche 11 peut être choisi parmi les résines époxydes polymérisant à haute température (entre 80°C et 140°C) et résistant bien à un milieu à pH élevé tel que celui existant dans le béton.

Enfin, pour réaliser l'ensemble représenté dans la figure 1, on peut par exemple utiliser une pièce métallique de diamètre constant, sur laquelle on va extruder des anneaux en matériau de protection contre la corrosion, espacés les uns des autres. Puis, on réalise une rainure dans ces anneaux, on place une fibre optique dans la rainure et on injecte un matériau thermodurcissable sur la fibre afin qu'elle soit enrobée par ce matériau, que la fibre soit dans la rainure (figure 2b) ou dans les portions situées entre les anneaux (figure 2c). Ce matériau thermodurcissable aura ainsi pour fonction de comprimer la fibre dans un état précontraint et de la protéger des légers chocs mécaniques qu'elle pourrait subir.

Il est à noter que, dans les ensembles illustrés dans les figures 1 et 3, il n'y a qu'une fibre optique et qu'une seule rainure 9, mais il serait tout à fait possible d'avoir des ensembles ayant plusieurs fibres optiques et plusieurs rainures, orientées le long de la direction longitudinale de la pièce métallique.

Dans le dispositif selon l'invention, et comme illustré dans les exemples ci-dessus, on constate que, du fait de la segmentation, la fibre optique 3 est alternativement solidaire d'un matériau de protection contre la corrosion formant la couche 8 - dans les portions de la pièce métallique protégées contre la corrosion (premières portions) - et solidaire du métal de la pièce métallique 2 - dans les portions de la pièce métallique non recouvertes par le matériau de protection contre la corrosion (secondes portions).

Cette segmentation permet d'atteindre deux objectifs, qui sont les suivants :

- d'une part, les agents de corrosion (chlorures, sulfates, $CO_2$) interagissent sélectivement sur les segments de métal non couverts par le matériau de protection contre la corrosion (segments découverts 14 dans la figure 6c) (au moins dans les premiers temps de propagation de la corrosion, avant qu'elle ne se propage sous les segments couverts 15) ;
- d'autre part, l'alternance de segments couverts et de segments découverts (segments 15 et 14 dans la figure 6c) permet de discriminer les deux contributions mécaniques dans le domaine spatial, à savoir celle due à l'action thermomécanique et celle due à la corrosion. En effet, l'action thermomécanique s'étend sur la totalité de la pièce métallique (segments couverts et découverts), car celle ci est solidaire mécaniquement de la structure. Par ailleurs, comme les gradients de température sont faibles au sein d'un ouvrage de grande ampleur et de forte inertie, la température peut être considérée comme constante entre deux segments successifs de longueur centimétrique. L'action de la corrosion est, quant à elle, localisée sur les segments découverts.

Il est important que, dans les segments couverts (premières portions de la pièce métallique recouvertes par le matériau de protection contre la corrosion), la fibre optique ne soit jamais en contact direct avec la pièce métallique, car cela pourrait constituer un point de progression de la corrosion. Or, s'il y a corrosion de la pièce métallique, il est nécessaire qu'elle se produise d'abord dans les segments découverts, et non dans les segments couverts. C'est la raison pour laquelle il est préférable que la profondeur de la rainure soit choisie inférieure à l'épaisseur de la couche de matériau de protection contre la corrosion, cette situation étant la plus favorable puisqu'elle permet de garantir une bonne étanchéité vis-à-vis des produits de corrosion, quel que soit le procédé entrepris pour le collage de la fibre dans la rainure. Il est possible de réaliser des rainures plus profondes que l'épaisseur de la couche de matériau de protection contre la corrosion mais, dans ce cas, l'étanchéité devra être assurée par le film de colle, ce qui peut ne pas être une garantie suffisante d'étanchéité (cas d'un film de colle imparfait avec des lacunes par exemple).

Dans les exemples illustrés dans les figures 5a à 5c et 6a à 6e, le choix des diamètres $d_0$ (si l'on veut former des épaulements), $d_1$ et $d_2$ se fait en prenant en compte les relations suivantes :

$$d_0 > d_1 > d_2$$

$$r < (d_1 - d_2)/2$$

où r est la profondeur de la rainure par rapport à la surface de métal de diamètre $d_1$.

Ainsi, cela garantit qu'il y a toujours une épaisseur de matériau de protection contre la corrosion entre la fibre optique et la pièce métallique dans les segments couverts, même dans l'hypothèse où la fibre serait située au fond de la rainure.

3-Exemple de procédure d'installation d'un dispositif de mesure de la corrosion selon l'invention dans un ouvrage de génie civil en béton armé

Le dispositif de mesure 10 tel qu'illustré dans la figure 7 comporte quatre ensembles 1 (quatre pièces métalliques instrumentées), reliés en série, et une unité de mesure, regroupant les moyens de mesure et de traitement 5 des moyens de transduction des pièces instrumentées et une source de lumière (non représentée), les quatre ensembles 1 étant noyés dans la structure 100 (ici, un ouvrage de génie civil) et l'unité de mesure comprenant les moyens de mesure et de traitement 5 étant placée à l'extérieur de la structure, une interface optique permettant de relier l'extrémité de l'une des pièces métalliques instrumentées à l'unité de mesure.

Dans cet exemple de réalisation, les quatre ensembles 1 sont placés en série et reliés par un câble à fibre optique renforcé (par exemple une tresse en aramide), ce câble étant connecté à une traversée optique étanche monovoie.

Selon que les moyens de transduction sont une fibre optique ou des réseaux de Bragg, l'unité de mesure comprend un spectromètre ou un réflectomètre OFDR.

Il est important que l'interface optique située à la surface de la structure reste étanche, afin de ne pas constituer un point d'entrée à l'intérieur de la structure pour les espèces corrosives et l'humidité. Pour cela, on peut pratiquer un logement 17 par coffrage à l'intérieur de la paroi de la structure 100 (tel que représenté dans les figures 7 et 8) afin de protéger la connectique optique, et utiliser une traversée étanche optique pour connecter la connectique optique à l'unité de mesure.

Il est à noter qu'en pratique les armatures passives, utilisées pour renforcer mécaniquement un ouvrage en béton, sont assemblées en treillis. Cependant, dans un souci de clarté, seules les armatures passives instrumentées par fibre optique (c'est à dire les quatre pièces métalliques instrumentées du dispositif selon l'invention) sont représentées dans les figures 7 et 8.

Le montage des pièces métalliques instrumentées dans l'ouvrage est laissé au choix de l'exploitant.

A titre d'exemple, l'exploitant peut choisir de placer plusieurs pièces métalliques instrumentées en série à une profondeur constante sur toute la longueur d'un ouvrage de grande dimension, afin de couvrir une surface la plus large possible. C'est ce qui est illustré dans la figure 7, où quatre armatures instrumentées sont assemblées en série à l'aide d'un câble optique 18 dans un plan vertical, parallèle à la paroi de l'ouvrage.

Mais d'autres montages des pièces métalliques instrumentées dans l'ouvrage sont également possibles. L'exploitant peut par exemple choisir de placer plusieurs réseaux de pièces métalliques instrumentées tels que ceux illustrés dans la figure 8. Dans la figure 8, on se retrouve avec plusieurs montages similaires à celui illustré dans la figure 7, qui sont connectés en parallèle à l'aide d'une traversée étanche optique multivoies. Les armatures instrumentées sont ainsi assemblées dans plusieurs plans parallèles à la paroi de l'ouvrage, et à différentes profondeurs. Cette configuration permet de suivre l'avancée d'un front de corrosion, par exemple un front de carbonatation.

Comme illustré dans la figure 8, on constate qu'il est tout à fait possible, pour des raisons économiques, d'utiliser une seule unité de mesure 5, similaire à celle représentée dans la figure 7. Dans ce cas, un commutateur optique 16 permet de raccorder la totalité des voies à l'unité de mesure selon un mode d'adressage parallèle. En fait, la mesure n'est pas réalisée simultanément sur toutes les voies mais séquentiellement, une voie après l'autre.

En pratique, les signaux sont moyennés sur un grand nombre d'acquisitions afin de réduire l'incertitude statistique. Ainsi, le temps de mesure est de l'ordre de quelques minutes par voie, soit de l'ordre d'une heure pour une traversée optique étanche de 16 voies. Néanmoins, cela n'est nullement limitatif car l'évolution thermomécanique d'un ouvrage de génie civil présente une cinétique comparable.

Enfin, il est à noter que les montages qui sont illustrés dans les figures 7 et 8 peuvent tout à fait être reproduits en plusieurs exemplaires pour un même ouvrage, afin d'accroître le nombre de pièces métalliques instrumentées.

4-Séparation des déformations dues aux contraintes thermomécaniques de celles dues à la corrosion

Nous allons à présent décrire comment analyser les résultats obtenus par chacune des pièces métalliques instrumentées du dispositif selon l'invention, et plus précisément comment réaliser la séparation des décalages en longueurs d'onde (ou en fréquence) dus aux contraintes thermomécaniques de ceux dus à la corrosion.

Lorsqu'une ou plusieurs pièces métalliques instrumentées d'un dispositif selon l'invention sont montées sur la surface ou au sein d'une structure, par exemple un ouvrage en béton, la ou les pièces métalliques instrumentées sont montées solidaires mécaniquement de la structure, et sont donc non seulement sensibles à la corrosion, mais également aux perturbations thermomécaniques liées au chargement de la structure, ainsi qu'aux cycles de températures qu'elle subit.

Ainsi, comme pour les CFO décrits dans l'art antérieur, il est nécessaire de séparer les contributions induites par la corrosion de celles induites par les contributions thermomécaniques de la structure, afin de pouvoir utiliser la ou les pièces métalliques instrumentées en situation réelle. En effet, la gamme de déformations d'origine thermomécanique d'une structure métallique ou comprenant au moins une armature métallique peut atteindre $\pm$ 500 microdéformations, voire plus, et donc excéder la gamme des déformations induites par le phénomène de corrosion.

Pour cela, il est nécessaire de réaliser au préalable un relevé de longueurs d'onde (ou de fréquences) pour chacune des pièces métalliques instrumentées du dispositif dès la mise en service de la structure à surveiller afin d'obtenir un profil de référence (« état zéro »), en absence de corrosion.

Puis, périodiquement au cours du temps, des profils sont enregistrés à la même heure, afin de les comparer au profil de référence pour surveiller l'apparition de la corrosion, et le cas échéant, pour la localiser précisément sur une pièce métallique d'une ou plusieurs pièces métalliques instrumentées et pour déterminer son ampleur.

Lorsque le procédé Bragg est utilisé, le profil thermomécanique est déduit des décalages spectraux entre les longueurs d'onde de Bragg de référence et celles mesurées en chacun des points de mesure (là où sont situés les réseaux de Bragg) sur les premières portions (portions de la pièce métallique protégées de la corrosion).

Lorsque le procédé OFDR est utilisé, le profil thermomécanique est déduit du calcul d'auto corrélation entre le profil de rétrodiffusion natif de la fibre optique et celui de la pièce métallique instrumentée sur les premières portions à laquelle ladite fibre optique appartient.

Dans un ouvrage de génie civil en béton armé, les gradients de températures sont faibles (quelques dixièmes de degrés par centimètre), de sorte que la ligne de base thermomécanique peut être considérée comme identique sur deux portions adjacentes séparées de quelques centimètres (ce qui est le cas dans notre exemple de réalisation). En pratique, une fibre conventionnelle monomode suffit donc pour discriminer les effets de corrosion des effets thermomécaniques. Dans le cas particulier où le gradient de température serait plus important, une fibre multimode à maintien de polarisation pourrait être utilisée en remplacement d'une fibre monomode conventionnelle, dans le but de discriminer le profil de température du profil de déformation en utilisant la procédure précédemment décrite.

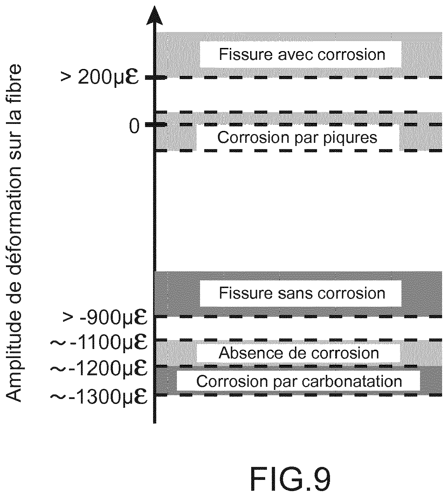

De même, les gradients de déformations sont de faible ampleur dans un ouvrage sain. En revanche, dans un ouvrage fissuré, l'essentiel de l'effort est alors repris par la pièce métallique instrumentée à l'endroit de la fissure, faisant alors apparaître une augmentation localisée dans le profil de déformation. L'analyse du profil de déformation permet cependant de discerner l'apparition d'une fissure d'une corrosion, comme en témoigne la figure 9.

• 4.1-Calibrage des pièces métalliques instrumentées

Afin de pouvoir distinguer les contraintes, on commence par réaliser le calibrage de chacune des pièces métalliques instrumentées du dispositif objet de l'invention.

Au moins un profil thermomécanique de référence (« ligne de base ») est tout d'abord enregistré dès la mise en service de la structure pour les premières et secondes portions de chacune des pièces métalliques instrumentées du dispositif.

Ce profil thermomécanique de référence est habituellement enregistré à une heure bien précise afin de se placer dans une condition thermomécanique la plus stable et reproductible possible, typiquement entre 5h00 à 6h00 du matin lorsque la structure s'est thermalisée durant toute la nuit et avant qu'un nouveau gradient de température, induit par l'éclairement solaire, n'apparaisse.

Les segments couverts (correspondant aux premières portions) présentent une rigidité moindre que les segments découverts (correspondant aux secondes portions), notamment du fait de leur différence de section métallique dans les exemples de réalisation représentés dans les figures 4a, 5c et 6e. On rappelle que la rigidité correspond au produit du module d'Young par la section. L'équilibre des forces à l'intérieur de la structure a donc comme conséquence de faire apparaitre deux profils de déformations distincts pour chaque type de segments, les déformations observées sur les segments couverts étant plus importantes que les déformations mesurées sur les segments découverts (de section métallique plus importante).

Le calibrage consiste à déterminer le ratio expérimental entre les deux déformations mesurées sur deux segments consécutifs d'un même motif de segmentation. En première approximation, ce ratio Q dépend du quotient des carrés des diamètres des sections métalliques des deux segments.

Dans les exemples décrits précédemment où l'on a choisi $d_1$ = 9 mm et $d_2$ = 6 mm, on a Q = $(d_2/d_1)^2$ ≈ 2,25.

• 4.2-Mesure de la corrosion

En situation de corrosion globale ou localisée, le profil de déformation contient une contribution de déformation supplémentaire dans les segments découverts, absente dans les segments couverts (au moins dans les premiers temps d'apparition de la corrosion).

Un exemple de procédure mathématique de mesure de la corrosion consiste à ajuster mathématiquement le profil thermomécanique (« ligne de base ») à partir des valeurs de déformations $\varepsilon_c$ mesurées dans les segments couverts (protégés de la corrosion). Cet ajustement mathématique sur une pluralité de points de mesure permet de réduire la variance par rapport à une mesure en un seul point et améliore donc la précision finale.

On réalise alors une interpolation de cette ligne de base (sur touts les segments découverts) par ajustement de type analyse des moindres carrés d'une fonction polynômiale dont le degré est réduit à 2 ou 3 pour réduire les risques d'oscillations.

Ces procédures existent en routine dans de nombreux logiciels d'acquisition de données.

Les valeurs interpolées sont alors pondérées par le coefficient de calibrage Q, déterminé lors du calibrage des pièces métalliques instrumentées du dispositif objet de l'invention, afin d'en déduire la déformation équivalente sur segment découvert.

On effectue alors une soustraction entre les valeurs de déformations mesurées sur les segments découverts et la ligne de base reconstituée (sur les segments découverts) pour faire apparaitre la contribution de déformation uniquement due à la corrosion.

Pour chacun des motifs de segmentation, on procède alors au calcul suivant :

$$\Delta\varepsilon = \varepsilon_d - Q.\varepsilon_c$$

où $\varepsilon_d$ et $\varepsilon_c$ sont les déformations mesurées sur les segments découvert et couvert respectivement, et $\Delta\varepsilon$ est le différentiel de déformation imputable à la corrosion.

4.3-Mesure de la contribution thermomécanique de la structure

Le profil de déformations obtenu à partir des segments couverts donne directement accès à la répartition des efforts thermomécaniques le long de chaque pièce métallique instrumentée.

En outre, comme la pièce métallique instrumentée est solidaire mécaniquement de la structure (par exemple, lorsqu'elle est noyée dans le béton en tant qu'armature de renforcement ou lorsqu'elle est fixée (par exemple à l'aide de vis) sur une structure métallique (coque d'un bateau, par exemple)), elle se comporte également comme un extensomètre. Elle permet donc de mesurer la distribution des déformations le long de la pièce métallique et donne ainsi une indication globale sur le chargement de la structure au cours de son cycle de vie.

Si une fibre optique conventionnelle est utilisée, l'exploitant a accès au profil thermomécanique (déformation équivalente fonction des effets de température et de déformation).

Si une fibre optique à maintien de polarisation est utilisée, l'exploitant peut avoir accès aux profils de température et de déformations, *via* l'inversion d'un système matriciel.

Dans le cas où la structure est un ouvrage en béton armé, la pièce métallique instrumentée permet aussi de localiser d'éventuelles fissures dans le cas où le béton se trouverait localement en traction excessive (au-delà de 150 à 200 microdéformations). Comme nous l'avons déjà vu plus haut, l'apparition d'une fissure localisée dans la structure se traduit par une augmentation locale de la déformation puisque le chargement à l'endroit de la fissure est intégralement repris par la pièce métallique instrumentée. Comme l'amplitude de la déformation induite par une fissure est différente de celle induite par la corrosion, il est possible de discriminer les deux.

5-Identification du processus de corrosion

Une fois que la corrosion a été détectée, il faut pouvoir identifier le processus de corrosion.

Pour rappel, plusieurs processus de corrosion sont susceptibles d'apparaitre selon l'environnement de la structure.

Lorsque la structure est en béton armé, les processus de corrosion sont les suivants.

En régions côtières ou fréquemment enneigées (nécessitant l'emploi de sels de déverglaçage), les chlorures issus de l'eau salée diffusent au sein du béton, peuvent détruire la couche d'oxyde protectrice située autour des armatures et pénétrer dans l'acier. Un processus de corrosion localisée par piqures peut alors démarrer, accéléré par l'accroissement de conductivité de l'électrolyte aqueux. Le fer se dégrade alors en rouille verte qui se dissout et re-précipite sous forme de rouille (oxyde de fer). Les produits de corrosion précurseurs (rouilles vertes) se présentent sous forme de gels, de faible rigidité mécanique, et peuvent être évacués par les fissures ouvertes présentes dans la structure.

Un second processus de corrosion est lié à la carbonatation du béton. Au fil des jours, le gaz carbonique ($CO_2$) présent dans l'air migre dans l'épaisseur du matériau de la structure, réagit avec le matériau (la portlandite) pour former du carbonate de calcium ($CaCO_3$), entrainant la baisse du pH de la solution interstitielle (jusqu'à environ 8 à 9). Le front de carbonatation progresse alors dans l'enrobage du béton sur une profondeur de plusieurs centimètres. Lorsque le front de carbonatation atteint l'armature, il se produit une dépassivation de l'armature, ce qui entraine un processus de corrosion généralisée provoquant la formation d'oxy-hydroxydes de fer (FeOOH) occupant un volume plus élevé que le fer initial (entre 3 et 6 fois plus).

Contrairement aux attaques par chlorures, les produits de corrosion par carbonatation présentent un module d'Young proche de celui de l'acier ($\approx$ 100 GPa) de sorte que la corrosion s'accompagne d'une mise en compression de l'interface fer-béton consécutive à l'accroissement de volume occupé par les résidus oxydés. Il en résulte un éclatement du béton d'enrobage, une diminution de la section des armatures et de l'adhérence acier-béton (épaufrure), réduisant ainsi la durée de vie de la structure.

Enfin, un troisième processus de corrosion correspond à la sulfatation des aciers liée à une attaque par des acides contenus dans l'eau de mer ou les eaux séléniteuses (riches en sélénite ou en sulfate de chaux). Tout comme pour la carbonatation, il en résulte également un éclatement du béton d'enrobage.

Lorsqu'une pièce métallique instrumentée est noyée dans un ouvrage en béton et est soumise à l'un des deux mécanismes de corrosion types (piqûres ou sulfatation/carbonatation), le signe de l'évolution de la contrainte appliquée permet de déduire s'il s'agit essentiellement d'une attaque par chlorures ou par sulfatation/carbonatation. Une même pièce métallique instrumentée permet donc de distinguer les deux mécanismes essentiels de corrosion.

En cas de corrosion par chlorures, les résidus de corrosion présentent une cohésion et une rigidité plus faibles (piqûres). La couche recouvrant la fibre optique et servant à la maintenir dans un état précontraint en compression (par exemple, couche de matériau thermodurci tel qu'un film de colle) se détache de la pièce métallique, contribuant à relâcher la précontrainte de compression appliquée à la fibre optique (en d'autres termes, la fibre optique revient vers son état initial, avant application de la précontrainte). On observe alors une traction apparente de la fibre optique, d'amplitude équivalente à la précontrainte en compression mais de signe opposé, soit typiquement +1200 microdéformations.

En cas de corrosion par carbonatation (pH faible, proche de 8 à 8,5), les résidus de corrosion de la pièce métallique présentent un volume important et une rigidité équivalente à celle de la pièce métallique non corrodée (par exemple, 200 GPa pour une pièce métallique en acier). La corrosion se traduit par la formation d'un film d'oxyde sur la pièce métallique (oxyde de fer sur la pièce métallique si celle-ci est en acier) et, comme ce film d'oxyde conserve sa cohésion, il s'ensuit une mise en compression du couple formé par la pièce métallique instrumentée et l'ouvrage en béton avec équilibre des contraintes. Cette compression de type hydrostatique se cumule à la précontrainte en compression de la fibre optique. Le béton étant un matériau moins rigide que l'acier ($E_{béton} \approx$ 30 GPa), celui-ci se déforme environ 7 fois plus. A la rupture du béton d'enrobage ($\approx$ 200 microdéformations), la pression atteinte est de l'ordre de 6 à 10 MPa (soit entre 60 et 100 bar). L'amplitude de la déformation équivalente est de l'ordre de quelques dizaines de microdéformations (entre -30 et -50 microdéformations). L'amplitude est donc beaucoup plus faible qu'en cas de corrosion par chlorures, mais reste cependant observable avec les instrumentations optiques OFDR ou Bragg, qui présentent une résolution de quelques microdéformations.

En situation de corrosion combinée, l'effet des chlorures est prépondérant puisqu'il entraine un changement de longueur d'onde plus important lié à la dégradation mécanique du substrat métallique.

Enfin, dans le cas où la pièce métallique instrumentée traverse une fissure au sein de la structure, la trace de déformation fait apparaitre une augmentation localisée ne pouvant toutefois pas être confondue avec la manifestation d'une corrosion puisque son amplitude attendue est différente de celle obtenue par corrosion.

Tous ces résultats sont compilés dans la figure 9, qui donne la répartition des risques de corrosion par zones de déformation (les zones de risque étant discriminées en termes d'amplitude de déformation). Ce diagramme montre que les processus intervenant dans un ouvrage de génie civil en béton armé peuvent être discriminés en termes d'amplitude de déformation dans le but de fournir un diagnostic sur la bonne santé de la structure.

Il est à noter que lorsque la structure est métallique, seule la corrosion par piqures peut être mesurée par le dispositif selon l'invention.

6-Exemples d'application du dispositif selon l'invention

Comme nous l'avons vu précédemment, une ou plusieurs pièces métalliques instrumentées du dispositif objet de l'invention peuvent être utilisées comme armature passive (armature de renforcement) dans un ouvrage de génie civil en béton armé, et fournir en même temps un diagnostic sur l'état de corrosion des armatures passives noyées à l'intérieur de la structure.

Après traitement du signal sur les données de déformations selon la procédure décrite plus haut, une pièce instrumentée du dispositif objet de l'invention permet d'estimer le profil de corrosion sur toute la longueur de la pièce métallique instrumentée par une ou plusieurs fibres optiques et, ainsi, de détecter précocement et précisément la corrosion au sein d'une structure.

Quel que soit le procédé métrologique mis en oeuvre (Bragg ou OFDR), l'exploitant peut alors localiser l'apparition de la corrosion, identifier le schéma essentiel de la réaction de corrosion (expansion ou piqûre), et suivre sa progression au cours du temps en corrélation avec les évènements climatiques et le chargement de la structure.

L'exploitant dispose ainsi d'un outil opérationnel innovant et original permettant d'envisager la mise en place d'une maintenance conditionnelle (CBM), dans la perspective de réduire les coûts d'inspection des structures et améliorer la stratégie d'intervention et de réhabilitation.

Les pièces métalliques instrumentées permettent en outre d'atteindre une couverture importante, en multipliant le nombre de pièces métalliques instrumentées que comporte le dispositif de mesure selon l'invention.

Le dispositif selon l'invention permet également de réaliser un diagnostic *in-situ* en profondeur dans une structure, ainsi que dans ses fondations, zones inaccessibles à l'observation.

Les structures concernées sont les tunnels, les bâtiments, les ponts, les barrages, les aéroréfrigérants de centrales nucléaires, les structures offshores, hydroliennes, éoliennes et fondations d'ouvrages côtiers ou en mer (digues, jetées, etc.), les structures enterrées, etc.

Enfin, d'autres exemples d'applications sont possibles, comme par exemple la mesure de la corrosion dans des ouvrages métalliques, par exemple les structures de transports tels que les avions, les bateaux. Dans ce cas, la ou les pièces métalliques instrumentées du dispositif objet de l'invention sont destinées à être fixées en surface de la structure ou utilisées simultanément comme élément de renforcement (par exemple, comme longeron, tendons etc.) et comme témoin de corrosion, afin de détecter et de localiser précisément des attaques corrosives.

**REFERENCES CITEES**

**[1]** S.K.T. Grattan et al.Monitoring of corrosion in structural reinforcing bars: performance comparison using in situ fiber-optic and electric wire strain gauge systems, IEEE Sensors Journal 2009, 9(11), 1494-1502

**[2]** J-R. Lee et al.A structural corrosion-monitoring sensor based on a pair of prestrained fiber Bragg gratings, Measurement Science and Technology 2010, 21(1), 017002.1-017002.7

**[3]** M. Froggatt et al.Distributing strain and temperature discrimination in unaltered polarization maintaining fiber, Optical Fiber Sensors Conference 2006, OFS 18, Cancun

**[4]** M. Froggatt et al.High-spatial resolution distributed strain measurement in optical fiber with Rayleigh scatter, Applied Optics 1998, 37(10), 1735-1740

**[5]** P. Ferdinand Capteurs à fibres optiques à réseaux de Bragg, Techniques de l'ingénieur 2001, R6735, 1-24

**Revendications**

1. Dispositif de mesure (10) de la corrosion dans une structure (100) métallique ou comprenant au moins une armature métallique, ledit dispositif comprenant :

   - au moins un ensemble (1) comprenant :

      • une pièce métallique (2), destinée à être rendue mécaniquement solidaire de la structure, ladite pièce métallique s'étendant selon une direction longitudinale et étant apte à subir des contraintes sous l'effet de la corrosion et/ou d'une variation thermomécanique ;
      • des moyens de transduction (4) comprenant une fibre optique (3), la fibre optique étant fixée sur la pièce métallique dans un état précontraint en compression de manière à subir les contraintes subies par la pièce métallique, lesdits moyens de transduction étant aptes à modifier une lumière se propageant dans la fibre optique sous l'effet des contraintes appliquées à la fibre optique ;

- des moyens de mesure et de traitement (5), pour mesurer et traiter les réponses spectrales fournies par les moyens de transduction dudit au moins un ensemble ;

le dispositif étant **caractérisé en ce que** la pièce métallique (2) dudit au moins un ensemble (1) présente une alternance de premières (6) et secondes (7) portions, agencées selon la direction longitudinale de la pièce métallique, chacune des premières et secondes portions étant associée à au moins un des moyens de transduction (4) et seules les premières portions (6) étant recouvertes d'une couche (8) en un matériau de protection contre la corrosion, de telle sorte que les réponses spectrales fournies par les moyens de transduction (4) associés aux premières portions (6) sont aptes à traduire l'application d'une contrainte thermomécanique aux premières portions, tandis que les réponses spectrales fournies par les moyens de transduction (4) associés aux secondes portions (7) sont aptes à traduire l'application d'une contrainte thermomécanique et/ou d'une corrosion aux secondes portions, ladite couche (8) en un matériau de protection contre la corrosion comportant une rainure (9) dans laquelle est logée la fibre optique (3) ; et
le dispositif étant caractérisé en que les moyens de mesure et de traitement (5) comprennent en outre des moyens pour comparer les réponses spectrales fournies par les moyens de transduction (4) associés aux premières portions (6) et celles fournies par les moyens de transduction (4) associés aux secondes portions (7), afin d'établir un profil de corrosion de la pièce métallique (2).

2.  Dispositif de mesure la revendication 1, dans lequel, pour au moins un ensemble (1), la rainure (9) dans laquelle est logée la fibre optique est également présente dans les secondes portions de la pièce métallique, la rainure étant pratiquée dans la surface extérieure de la pièce métallique.

3.  Dispositif de mesure selon l'une quelconque des revendications 1 ou 2, dans lequel, pour au moins un ensemble (1), les premières (6) et secondes (7) portions adjacentes de la pièce métallique (2) forment un motif périodique qui se répète selon la direction longitudinale de la pièce métallique.

4.  Dispositif de mesure selon l'une quelconque des revendications 1 à 3, dans lequel, pour au moins un ensemble (1), l'état précontraint en compression de la fibre optique est obtenu grâce à la présence d'une couche (11) en un matériau thermodurci qui recouvre la fibre optique (3) et la comprime sur la pièce métallique (2) lors de son refroidissement.

5.  Dispositif de mesure selon l'une quelconque des revendications 1 à 4, dans lequel, pour au moins un ensemble (1), la pièce métallique (2) de chaque ensemble (1) du dispositif comporte des épaulements (12) agencés selon la direction longitudinale de la pièce métallique.

6.  Dispositif de mesure selon l'une quelconque des revendications 1 à 5, dans lequel, lorsque la structure est métallique, la pièce métallique de chaque ensemble est en un matériau similaire, de préférence identique, au matériau de la structure et, lorsque la structure n'est pas métallique et comporte une armature métallique, la pièce métallique de chaque ensemble est en un matériau similaire, de préférence identique, au matériau de l'armature métallique.

7.  Dispositif de mesure selon l'une quelconque des revendications 1 à 6, dans lequel, pour au moins un ensemble (1), les moyens de transduction (4) sont constitués par une fibre optique ou par des réseaux de Bragg, photoinscrits dans une fibre optique.

8.  Dispositif de mesure selon la revendication 7, dans lequel, lorsque les moyens de transduction sont constitués par des réseaux de Bragg photoinscrits dans une fibre optique (3) fixée sur une pièce métallique, chacune des premières (6) et secondes (7) portions de cette pièce métallique est associée à au moins un réseau de Bragg et les moyens de mesure et de traitement (5) comportent un système optoélectronique de mesure permettant de mesurer la longueur d'onde de Bragg caractéristique de chacun des réseaux de Bragg photoinscrits dans la fibre optique.

9.  Dispositif de mesure selon la revendication 7, dans lequel, lorsque les moyens de transduction sont constitués par une fibre optique, les moyens de mesure et de traitement (5) appliquent une technique de mesure par réflectométrie Rayleigh OFDR à cette fibre optique (3), la résolution de mesure de cette technique étant choisie centimétrique et inférieure à la plus petite des premières et secondes portions de la pièce métallique sur laquelle est fixée la fibre optique.

10. Dispositif de mesure selon l'une quelconque des revendications 1 à 9, comprenant plusieurs ensembles (1), lesdits ensembles étant reliés en parallèle et/ou en série.

**11.** Utilisation d'un dispositif (10) tel que défini dans l'une quelconque des revendications 1 à 10 pour la détection de la corrosion au sein d'une structure (100) comprenant un corps principal métallique ou en béton et une ou plusieurs armatures métalliques, au moins une des armatures métalliques étant constituée par la pièce métallique (2) d'un ensemble (1) du dispositif.

**12.** Utilisation d'un dispositif tel que défini dans l'une quelconque des revendications 1 à 10 comme témoin de corrosion pour une structure (100) métallique, la pièce métallique (2) de chaque ensemble (1) du dispositif étant fixée à la surface de la structure (100).

**13.** Procédé de détection et de localisation de la corrosion sur une pièce métallique d'un ensemble du dispositif tel que défini dans l'une quelconque des revendications 1 à 10, ladite pièce étant rendue solidaire mécaniquement d'une structure métallique ou comprenant au moins une armature métallique, le procédé comprenant, pour chaque ensemble, les étapes suivantes :

- la mesure de l'évolution de l'amplitude de la réponse spectrale au cours du temps pour chacune des premières et secondes portions de la pièce métallique ;
- la détermination de la contribution de la corrosion sur l'évolution de l'amplitude de la réponse spectrale au cours du temps par comparaison entre les amplitudes de réponses spectrales de premières et secondes portions adjacentes ;
- si la contribution de la corrosion sur l'évolution de l'amplitude est supérieure, en valeur absolue, à une valeur seuil sur au moins l'une des secondes portions de la pièce métallique, la détermination de la présence de corrosion sur ladite au moins une seconde portion ; et
- éventuellement, la détermination du type de corrosion selon le signe de l'évolution de l'amplitude.

**Patentansprüche**

**1.** Messvorrichtung (10) zur Messung der Korrosion in einer Metallstruktur (100), oder welche wenigstens eine Metallverstärkung umfasst, wobei die Vorrichtung umfasst:

- wenigstens eine Anordnung (1), umfassend:

• ein Metallteil (2), welches dazu ausgebildet ist, mit der Struktur fest verbunden zu werden, wobei sich das Metallteil entlang einer Längsrichtung erstreckt und dazu ausgebildet ist, Belastungen durch die Wirkung der Korrosion und/oder einer thermomechanischen Schwankung ausgesetzt zu sein;
• Wandlermittel (4), welche eine optische Faser (3) umfassen, wobei die optische Faser an dem Metallteil unter Komprimierung in einem vorgespannten Zustand befestigt ist, sodass sie den auf das Metallteil wirkenden Belastungen ausgesetzt ist, wobei die Wandlermittel dazu ausgebildet sind, ein Licht zu verändern, welches sich unter dem Einfluss der auf die optische Faser wirkenden Belastungen in der optischen Faser ausbreitet;

- Mess- und Verarbeitungsmittel (5) zur Messung und Verarbeitung der von den Wandlermitteln der wenigstens einen Anordnung gelieferten Spektralantworten;

wobei die Vorrichtung **dadurch gekennzeichnet ist, dass** das Metallteil (2) der wenigstens einen Anordnung (1) einen Wechsel zwischen ersten (6) und zweiten (7) Abschnitten aufweist, welche in der Längsrichtung des Metallteils angeordnet sind, wobei jeder der ersten und zweiten Abschnitte wenigstens einem der Wandlermittel (4) zugeordnet ist, und wobei nur die ersten Abschnitte (6) von einer Schicht (8) eines Korrosionsschutzmittels derart bedeckt sind, dass die von den Wandlermitteln (4), welche den ersten Abschnitten (6) zugeordnet sind, gelieferten Spektralantworten dazu ausgebildet sind, die Ausübung einer thermomechanischen Belastung auf die ersten Abschnitte umzusetzen, während die von den Wandlermitteln (4), welche den zweiten Abschnitten (7) zugeordnet sind, gelieferten Spektralantworten dazu ausgebildet sind, die Ausübung einer thermomechanischen Belastung und/oder einer Korrosion auf die zweiten Abschnitte umzusetzen, wobei die Schicht (8) aus Korrosionsschutzmittel eine Nut (9) aufweist, in welcher die optische Faser (3) aufgenommen ist; und wobei die Vorrichtung **dadurch gekennzeichnet ist, dass** die Mess- und Verarbeitungsmittel (5) ferner Mittel umfassen, um die von den Wandlermitteln (4), welche den ersten Abschnitten (6) zugeordnet sind, gelieferten Spektralantworten mit den von den Wandlermitteln (4), welche den zweiten Abschnitten (7) zugeordnet sind, gelieferten Spektralantworten zu vergleichen, um ein Korrosionsprofil des Metallteils (2) zu erstellen.

**2.** Messvorrichtung nach Anspruch 1, wobei bei wenigstens einer Anordnung (1) die Nut (9), in der die optische Faser aufgenommen ist, auch in den zweiten Abschnitten des Metallteils vorliegt, wobei die Nut in der Außenfläche des Metallteils ausgeführt ist.

3. Messvorrichtung nach einem der Ansprüche 1 oder 2, wobei bei wenigstens einer Anordnung (1) die dem Metallteil (2) benachbarten ersten (6) und zweiten (7) Abschnitte ein periodisches Muster bilden, das sich in der Längsrichtung des Metallteils wiederholt.

4. Messvorrichtung nach einem der Ansprüche 1 bis 3, wobei bei wenigstens einer Anordnung (1) der vorgespannte Zustand unter Komprimierung der Glasfaser aufgrund des Vorliegens einer Schicht (11) aus einem wärmegehärteten Material erreicht wird, welche die Glasfaser (3) bedeckt und sie während des Abkühlens auf dem Metallteil (2) komprimiert.

5. Messvorrichtung nach einem der Ansprüche 1 bis 4, wobei bei wenigstens einer Anordnung (1) das Metallteil (2) jeder Anordnung (1) der Vorrichtung in der Längsrichtung des Metallteils angeordnete Absätze (12) umfasst.

6. Messvorrichtung nach einem der Ansprüche 1 bis 5, wobei, wenn die Struktur aus Metall besteht, das Metallteil jeder Anordnung aus einem dem Material der Struktur ähnlichen Material besteht, vorzugsweise mit diesem identisch ist, und wenn die Struktur nicht aus Metall besteht und ein Metallgerüst aufweist, das Metallteil jeder Anordnung aus einem dem Material des Metallgerüsts ähnlichen Material besteht, vorzugsweise mit diesem identisch ist.

7. Messvorrichtung nach einem der Ansprüche 1 bis 6, wobei bei wenigstens einer Anordnung (1) die Wandlermittel (4) aus einer optischen Faser oder aus in einer optischen Faser fotoinduzierten Bragg-Gittern gebildet sind.

8. Messvorrichtung nach Anspruch 7, wobei, wenn die Wandlermittel aus fotoinduzierten Bragg-Gittern in einer auf einem Metallteil befestigten optischen Faser (3) gebildet sind, jeder der ersten (6) und zweiten (7) Abschnitte dieses Metallteils wenigstens einem Bragg-Gitter zugeordnet ist, und die Mess- und Verarbeitungsmittel (5) ein optoelektronisches Messsystem umfassen, welches die Messung der Bragg-Wellenlänge erlaubt, die für jedes in einer optischen Faser fotoinduzierte Bragg-Gitter charakteristisch ist.

9. Messvorrichtung nach Anspruch 7, wobei, wenn die Wandlermittel aus einer optischen Faser gebildet sind, die Mess- und Verarbeitungsmittel (5) bei dieser Glasfaser (3) ein Messverfahren durch Raleigh-Reflektometrie (OFDR) nutzen, wobei die Messauflösung dieses Verfahrens mit Zentimetereinteilung und kleiner als der kleinere der ersten und zweiten Abschnitte des Metallteils, auf dem die optische Faser befestigt ist, gewählt ist.

10. Messvorrichtung nach einem der Ansprüche 1 bis 9, welche mehrere Anordnungen (1) umfasst, wobei die Anordnungen parallel und/oder in Serie miteinander verbunden sind.

11. Verwendung einer Vorrichtung (10) nach einem der Ansprüche 1 bis 10 zur Erfassung der Korrosion in einer Metallstruktur (100), welche einen Hauptkörper aus Metall oder Beton und einen oder mehrere Metallverstärkungen umfasst, wobei wenigstens eine der Metallverstärkungen durch das Metallteil (2) einer Anordnung (1) der Vorrichtung gebildet ist.

12. Verwendung einer Vorrichtung nach einem der Ansprüche 1 bis 10 als Korrosionsnachweis für eine Metallstruktur (100), wobei das Metallteil (2) jeder Anordnung (1) der Vorrichtung an der Oberfläche der Struktur (100) befestigt ist.

13. Verfahren zur Erfassung und Lokalisierung der Korrosion auf einem Metallteil einer Anordnung der Vorrichtung nach einem der Ansprüche 1 bis 10, wobei das Teil mechanisch fest mit einer Metallstruktur verbunden wird oder wenigstens eine Metallverstärkung aufweist, wobei das Verfahren für jede Anordnung die folgenden Schritte umfasst:

   - Messen des Amplitudenverlaufs der Spektralantwort im Zeitverlauf für jeden der ersten und zweiten Abschnitte des Metallteils;
   - Bestimmen des Einflusses der Korrosion auf den Amplitudenverlauf der Spektralantwort im Zeitverlauf durch Vergleich der Amplituden der Spektralantworten bei benachbarten ersten und zweiten Abschnitten;
   - wenn der Einfluss der Korrosion auf den Amplitudenverlauf bei wenigstens einem der zweiten Abschnitte des Metallteils in absoluten Werten größer ist als ein Grenzwert, Bestimmung der Korrosion an dem wenigstens einen zweiten Abschnitt; und
   - gegebenenfalls Bestimmung des Korrosionstyps gemäß dem Vorzeichen des Amplitudenverlaufs.

**Claims**

1. Device (10) for measuring corrosion in a metallic structure (100) or a structure comprising at least one metallic reinforcement, said device comprising:

   - at least one assembly (1) that comprises:

      • a metallic part (2) intended to be mechanically secured to the structure, said metallic part extending in a longitudinal direction and being able to undergo stresses under the effect of corrosion and/or a thermomechanical variation;

• transduction means (4) comprising an optical fibre (3), the optical fibre being fixed to the metallic part in a prestressed state under compression so as to undergo the stresses suffered by the metallic part, said transduction means being able to modify light propagating in the optical fibre under the effect of the stresses applied to the optical fibre;

- measurement and processing means (5) for measuring and processing the spectral responses supplied by the transduction means of said at least one assembly;

the device being **characterised in that** the metallic part (2) of said at least one assembly (1) has an alternation of first (6) and second (7) portions, arranged in the longitudinal direction of the metallic part, each of the first and second portions being associated with at least one of the transduction means (4) and only the first portions (6) being covered with a layer (8) of corrosion-protection material, so that the spectral responses supplied by the transduction means (4) associated with the first portions (6) are able to translate the application of a thermomechanical stress to the first portions, while the spectral responses supplied by the transduction means (4) associated with the second portions (7) are able to translate the application of a thermomechanical stress and/or a corrosion to the second portions, said layer (8) of corrosion-protection material comprising a groove (9) in which the optical fibre (3) is housed; and

the device being **characterised in that** the measurement and processing means (5) further comprise means for comparing the spectral responses supplied by the transduction means (4) associated with the first portions (6) and those supplied by the transduction means (4) associated with the second portions (7), in order to establish a corrosion profile of the metallic part (2).

2. Measuring device according to claim 1, in which, for at least one assembly (1), the groove (9) in which the optical fibre is housed is also present in the second portions of the metallic part, the groove being formed in the external surface of the metallic part.

3. Measuring device according to either one of claims 1 or 2, in which, for at least one assembly (1), the first (6) and second (7) portions adjacent to the metallic part (2) form a periodic pattern that is repeated in the longitudinal direction of the metallic part.

4. Measuring device according to any one of claims 1 to 3, in which, for at least one assembly (1), the prestressed state under compression of the optical fibre is obtained by virtue of the presence of a layer (11) made from a thermoset material that covers the optical fibre (3) and compresses it on the metallic part (2) when it cools.

5. Measuring device according to any one of claims 1 to 4, in which, for at least one assembly (1), the metallic part (2) of each assembly (1) of the device comprises shoulders (12) arranged in the longitudinal direction of the metallic part.

6. Measuring device according to any one of claims 1 to 5, in which, when the structure is metallic, the metallic part of each assembly is made from a material that is similar, preferably identical, to the material of the structure and, when the structure is not metallic and comprises a metallic reinforcement, the metallic part of each assembly is made from a material that is similar, preferably identical, to the material of the metallic reinforcement.

7. Measuring device according to any one of claims 1 to 6, in which, for at least one assembly (1), the transduction means (4) are formed by an optical fibre or Bragg gratings, photoinscribed in an optical fibre.

8. Measuring device according to claim 7, in which, when the transduction means are formed by Bragg gratings photoinscribed in an optical fibre (3) fixed to a metallic part, each of the first (6) and second (7) portions of this metallic part is associated with at least one Bragg grating and the measuring and processing means (5) comprise an optoelectronic measuring system for measuring the Bragg wavelength characteristic of each of the Bragg gratings photoinscribed in the optical fibre.

9. Measuring device according to claim 7, in which, when the transduction means consist of an optical fibre, the measuring and processing means (5) apply a technique of measuring by OFDR Rayleigh reflectometry to this optical fibre (3), the measuring resolution of this technique being chosen so as to be centimetric and less than the smallest of the first and second portions of the metallic part on which the optical fibre is fixed.

10. Measuring device according to any one of claims 1 to 9, comprising several assemblies (1), said assemblies being connected in parallel and/or in series.

11. Use of a device (10) as defined in any one of claims 1 to 10 for detecting corrosion in a structure (100) comprising a main body that is metallic or made from concrete and one or more metal reinforcements, at least one of the metal reinforcements consisting of the metallic part (2) of an assembly (1) of the device.

**12.** Use of a device as defined in any one of claims 1 to 10 as a corrosion telltale for a metallic structure (100), the metallic part (2) of each assembly (1) of the device being fixed to the surface of the structure (100).

**13.** Method for detecting and locating the corrosion on a metal part of an assembly of the device as defined in any one of claims 1 to 10, said part being mechanically secured to a metallic structure or a structure comprising at least one metallic reinforcement, the method comprising, for each assembly, the following steps:

- measuring the change in amplitude of the spectral response over time for each of the first and second portions of the metallic part;
- determining the contribution of the corrosion to the change in the amplitude of the spectral response over time by comparison between the amplitudes of spectral responses of first and second adjacent portions;
- if the contribution of the corrosion to the change in amplitude is greater, in absolute value, than a threshold value on at least one of the second portions of the metallic part, determining the presence of corrosion on said at least one second portion; and
- optionally, determining the type of corrosion according to the sign of the change in amplitude.

FIG.1

FIG.2a

FIG.2b

FIG.2c

FIG.3

FIG.4a

FIG.4b

FIG.4c

FIG.5a

FIG.5b

FIG.5c

FIG.6a

FIG.6b

FIG.6c

FIG.6d

FIG.6e

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GRATTAN et al.** Monitoring of corrosion in structural reinforcing bars: performance comparison using in situ fiber-optic and electric wire strain gauge systems. *IEEE Sensors Journal,* 2009, vol. 9 (11), 1494-1502
- **LEE et al.** A structural corrosion-monitoring sensor based on a pair of prestrained fiber Bragg gratings. *Measurement Science and Technology,* 2010, vol. 21 (1), 017002.1-017002.7
- **FROGATT et al.** Distributing strain and temperature discrimination in unaltered polarization maintaining fiber. *Optical Fiber Sensors Conference,* 2006
- **FROGGATT et al.** High-spatial resolution distributed strain measurement in optical fiber with Rayleigh scatter. *Applied Optics,* 1998, vol. 37 (10), 1735-1740
- **P. FERDINAND.** Capteurs à fibres optiques à réseaux de Bragg. *Techniques de l'ingénieur,* 2001, vol. R6735, 1-24

- **S.K.T. GRATTAN et al.** Monitoring of corrosion in structural reinforcing bars: performance comparison using in situ fiber-optic and electric wire strain gauge systems. *IEEE Sensors Journal,* 2009, vol. 9 (11), 1494-1502
- **J-R. LEE et al.** A structural corrosion-monitoring sensor based on a pair of prestrained fiber Bragg gratings. *Measurement Science and Technology,* 2010, vol. 21 (1), 017002.1-017002.7
- **M. FROGGATT et al.** Distributing strain and temperature discrimination in unaltered polarization maintaining fiber. *Optical Fiber Sensors Conference,* 2006
- **M. FROGGATT et al.** High-spatial resolution distributed strain measurement in optical fiber with Rayleigh scatter. *Applied Optics,* 1998, vol. 37 (10), 1735-1740